(19) Europäisches Patentamt / European Patent Office / Office européen des brevets

(11) **EP 2 132 667 B1**

(12) **EUROPÄISCHE PATENTSCHRIFT**

(45) Veröffentlichungstag und Bekanntmachung des Hinweises auf die Patenterteilung:
**13.10.2010 Patentblatt 2010/41**

(21) Anmeldenummer: **08773485.1**

(22) Anmeldetag: **17.06.2008**

(51) Int Cl.:
*G06F 17/30* (2006.01)   *G11B 27/28* (2006.01)
*H04N 5/14* (2006.01)

(86) Internationale Anmeldenummer:
**PCT/EP2008/004873**

(87) Internationale Veröffentlichungsnummer:
**WO 2008/155094 (24.12.2008 Gazette 2008/52)**

(54) **AUTOMATISIERTES VERFAHREN ZUR ZEITLICHEN SEGMENTIERUNG EINES VIDEOS IN SZENEN UNTER BERÜCKSICHTIGUNG VERSCHIEDENER TYPEN VON ÜBERGÄNGEN ZWISCHEN BILDFOLGEN**

AUTOMATED METHOD FOR TEMPORAL SEGMENTATION OF VIDEO INTO SCENES CONSIDERING DIFFERENT TYPES OF TRANSITIONS BETWEEN IMAGE SEQUENCES

PROCÉDÉ AUTOMATISÉ DE SEGMENTATION TEMPORELLE D'UNE VIDÉO EN SCÈNES AVEC PRISE EN COMPTE DE DIFFÉRENTS TYPES DE TRANSITIONS ENTRE DES SÉQUENCES D'IMAGES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **20.06.2007 DE 102007028175**

(43) Veröffentlichungstag der Anmeldung:
**16.12.2009 Patentblatt 2009/51**

(73) Patentinhaber: **Fraunhofer-Gesellschaft zur Förderung der angewandten Forschung e.V.**
**80686 München (DE)**

(72) Erfinder: **PETERSOHN, Christian**
**13086 Berlin (DE)**

(74) Vertreter: **Schenk, Markus et al**
**Schoppe, Zimmermann, Stöckeler & Zinkler Patentanwälte**
**Postfach 246**
**82043 Pullach bei München (DE)**

(56) Entgegenhaltungen:
**EP-A- 0 690 413    EP-A- 1 722 371**
**WO-A-00/51078    WO-A-2007/072347**

US-A- 5 485 611    US-A- 5 537 528

• **ALAN HANJALIC ET AL: "Automated High-Level Movie Segmentation for Advanced Video-Retrieval Systems" IEEE TRANSACTIONS ON CIRCUITS AND SYSTEMS FOR VIDEO TECHNOLOGY, IEEE SERVICE CENTER, PISCATAWAY, NJ, US, Bd. 9, Nr. 4, 1. Juni 1999 (1999-06-01), XP011014580 ISSN: 1051-8215**
• **YEUNG M ET AL: "Segmentation of Video by Clustering and Graph Analysis" COMPUTER VISION AND IMAGE UNDERSTANDING, ACADEMIC PRESS, US, Bd. 71, Nr. 1, 1. Juli 1998 (1998-07-01), Seiten 94-109, XP004448871 ISSN: 1077-3142**
• **CHRISTIAN PETERSOHN: "Video structure detection" HEINRICH-HERTZ-INSTITUT, [Online] XP002497647 Gefunden im Internet: URL:http://www.hhi.fraunhofer.de/fileadmin /user_ upload/HHI-Website/abteilungen/im-in teraktive-medien-human-factors/produkte/vi deoarchivierung/art/VideoStructureDetectio n.pdf> [gefunden am 2008-09-25]**
• **BA TU TRUONG ET AL: "SCENE EXTRACTION IN MOTION PICTURES" IEEE TRANSACTIONS ON CIRCUITS AND SYSTEMS FOR VIDEO TECHNOLOGY, IEEE SERVICE CENTER, PISCATAWAY, NJ, US, Bd. 13, Nr. 1, 1. Januar 2003 (2003-01-01), Seiten 5-15, XP001142849 ISSN: 1051-8215**

EP 2 132 667 B1

## Beschreibung

Die Erfindung bezieht sich auf ein automatisiertes Verfahren zur zeitlichen Segmentierung eines Videos in Szenen mit einer Zusammenfassung von Bildfolgen durch eine Erkennung von Bildfolgengrenzen als Szenengrenzen, wobei an den Bildfolgengrenzen verschiedene Typen von Übergängen auftreten und die Bildfolgengrenzen und Übergänge nach Lage, Typ und Länge bekannt sind.

Die automatisierte Erkennung von Szenengrenzen und damit von Szenen dient dazu, den Nutzer beim Browsen eines Videos zu unterstützen, ihm den Inhalt schneller und besser zugänglich zu machen, die Erstellung einer Art Inhaltsverzeichnis und weiterführende (automatische oder manuelle) Analysen und Annotationen zu ermöglichen. Szenen bestehen aus einer Reihe von Bildfolgen, in der Regel Shots (siehe weiter unten), und sind **dadurch gekennzeichnet, dass** ein Ereignis an einem Ort in einer zusammenhängenden Zeitspanne stattfindet. Dabei wird der Begriff "Szene" (oder "Logical Story Unit") in fiktionalen, erzählerischen Videos (beispielsweise Spielfilme, Sitcoms, Zeichentrickfilme) verwendet. In nicht fiktionalen Videos (beispielsweise Nachrichten, Dokumentarfilme, Lehrfilme, Musik- und Sportsendungen) wird analog dazu der Begriff "Topic Unit" oder "Topic" verwendet. Der Oberbegriff für "Szenen" und "Topic Units" ist "Logical Unit" (oder "Story Unit"). Dieser Begriff ist aber in der Fachwelt nicht durchgängig etabliert, sodass im Folgenden der Begriff "Szene" verwendet wird mit einem Bezug auf alle Videos unabhängig von ihrem Inhalt. Weiterhin werden die Begriffe "Video" und "Film" sowie "Videobild" und "Bild" kompatibel zueinander verwendet.

Gegenstand der vorliegenden Erfindung ist die Segmentierung von Videos in Szenen durch Zusammenführung von speziellen Bildfolgen. Es muss also erkannt werden, welche Bildfolgengrenzen gleichzeitig Szenengrenzen sind. In der Regel werden Szenen aus Shots als spezielle Bildfolgen zusammengesetzt. Es kann aber auch eine Szenengrenze innerhalb eines Shots liegen. Diese wird bei einer Segmentierung jedoch nur erkannt, wenn der Shot in einzelne Subshots (als untergeordnete Bildfolge zur Bildfolge Shot) unterteilt und überprüft wird, ob eine Subshotgrenze gleichzeitig Szenengrenze ist. Somit kann eine Szenengrenze auch auf einer Subshotgrenze inmitten eines Shots liegen. An Subshotgrenzen treten jedoch keine auf Filmgrammatik basierenden graduellen Übergänge auf. Entsprechend werden Subshotübergänge im Folgenden wie Übergänge vom Typ CUT behandelt. Die Kenntnis der einzelnen Shots oder Subshots und deren Übergänge nach Lage, Länge und Typ ist Voraussetzung zur Anwendung des Verfahrens nach der Erfindung. Im Folgenden wird eine Detektion von Shotgrenzen und zugehörigen Shotübergängen vorausgesetzt. Das Verfahren nach der Erfindung lässt sich auch auf Subshotgrenzen und Subshotübergänge anwenden, wenn diese durch ein entsprechendes Detektionsverfahren nach zeitlicher Lage, Typ und Länge bekannt sind. Der Begriff "Bildfolge" wird im Folgenden sowohl für "Shot" als auch für den Begriff "Subshot" verwendet.

Eine Bildfolgengrenze ist videobildgenau festgelegt, das heißt, sie liegt genau zwischen zwei aufeinander folgenden Videobildern (Frames). "Übergänge" sind immer Übergänge zwischen Bildfolgen. Sie stimmen mit der Bildfolgengrenze überein oder schließen diese ein. Zu unterscheiden sind vier verschiedene Typen von Übergängen: Der Typ CUT ist ein harter, abrupter Schnitt. Der CUT ist videobildgenau festgelegt und stimmt mit der Bildfolgengrenze überein. Im Gegensatz zu diesem abrupten Übergang existieren noch drei graduelle, kontinuierliche Übergänge zwischen Shots als Bildfolgen: der Typ DISSOLVE als Überblendung (ein Bild wird langsam vollständig ausgeblendet, während im selben Tempo ein anderes Bild eingeblendet wird); der Typ FADE als Aus- oder Einblendung (Fade-out, Fade-in) in ein schwarzes Bild und der Typ WIPE als Wischblende, bei dem ein Bild vom Bildschirm geschoben wird durch ein neues Bild, das sich im gleichen Maße in den Bildschirm hineinschiebt. Es können auch Teile des alten Bildes nacheinander durch Teile des neuen Bildes ersetzt werden. Dabei durchlaufen eine oder mehrere Grenzen den Bildschirm (beispielsweise nach dem Prinzip eines "Scheibenwischers"). Bei den genannten graduellen Übergängen handelt es sich um die am häufigsten auftretenden und in einer Filmgrammatik genutzten Übergänge. Es existieren aber noch andere graduelle Übergänge, die analog in die vorliegende Erfindung einbezogen sind.

Allgemein sind verschiedene Verfahren zur zeitlichen Segmentierung eines Videos in Szenen bekannt. Zu unterscheiden sind Verfahren zur Szenensegmentierung, die auf visuellen Eigenschaften, insbesondere der Ähnlichkeit zwischen einzelnen Shots, beruhen (ähnlichkeitsbasierte. Verfahren, beispielsweise "Overlapping Links", "Clustering", "Time adaptive Grouping", "Graph based"); Kohärenzverfahren ("video coherence/ decision curve"), bei denen Kohärenzwerte für bestimmte Punkte (oft Shotgrenzen) als Maß für wie Beständigkeit ("coherence") des Videoinhalts vor und hinter diesem Punkt (minimale Kohärenzwerte zeigen Szenengrenzen an), und regel- und modellbasierte Verfahren, die jedoch bei der Szenensegmentierung nur eine untergeordnete Rolle spielen. Im Folgenden werden Verfahren zur Szenensegmentierung betrachtet, die entweder ähnlichkeits- oder kohärenzbasiert sind.

## STAND DER TECHNIK

Verfahren zum Auffinden von Shotgrenzen unter Berücksichtigung der Shotübergänge nach Lage, Typ und Länge sind beispielsweise bekannt aus:

VERÖFFENTLICHUNG I: C. Petersohn. "Fraunhofer HHI at TRECVID 2004: Shot Boundary Detection System", TREC Video Retrieval Evaluation Online Proceedings, TRECVID, 2004,
**VERÖFFENTLICHUNG II**: C. Petersohn. "Dissolve Shot Boundary Determination", Proc. IEE European Workshop on the Integration of Knowledge, Semantics and Digital Media Technology, pp. 87-94, London, UK, 2004 und
**VERÖFFENTLICHUNG III**: C. Petersohn. "Wipe Shot Boundary Determination", Proc. IS&T/SPIE Electronic Imaging 2005, Storage and Retrieval Methods and Applications for Multimedia, pp. 337-346, San Jose, CA, 2005.

Ein Verfahren zum Auffinden von Subshotgrenzen und Subshotübergängen ist bekannt aus der **VERÖFFENTLICHUNG IV**: C. Petersohn. "Sub-Shots - Basic Units of Video", Proc. IEEE International Conference on Systems, Signals and Image Processing, and EURASIP Conference Focused on Speech and Image Processing, Multimedia Communications and Services, Maribor, Slowenien, 27. bis 29. Juni 2007

Weiterhin nennen die US 200310123541 A1, US 200110021276 A1, EP 1 021 041 B1, DE 60119012 T2 und DE 102 527 31 A1 Verfahren zum Auffinden von Shotübergängen. Derartige Verfahren sind also ausreichend aus dem Stand der Technik bekannt und brauchen hier nicht weiter erläutert werden. Es kann davon ausgegangen werden, dass dem Fachmann die für die Durchführung des Verfahrens nach der Erfindung erforderlichen Informationen über die zeitliche Lage von Bildfolgengrenzen und den Typ und die Länge von Übergängen an den Bildfolgengrenzen bekannt sind.

Weiterhin gibt es im Stand der Technik eine Reihe von Verfahren zur Szenenerkennung, die jedoch in der Regel auf der visuellen Ähnlichkeit von Shots innerhalb von Szenen beruhen. Teilweise wird auch Audio oder Text analysiert. Es existieren jedoch drei Veröffentlichungen, in denen verschiedene Typen von Shotübergängen für die Szenenerkennung genutzt werden. Aus der **VERÖFFENTUCHUNG V** von Truong, B. T., Venkatesh, S., Dorai, C. (2002) "Film grammar based refinements to extracting scenes in motion pictures" (IEEE International Conference on Multimedia and Expo. ICME, 02., Vol. 1, pp 281-284) ist es bekannt, alle FADES zu verwenden und deren Positionen als Szenengrenzen der Liste der anderweitig erkannten Szenengrenzen hinzuzufügen. FADES werden also ausschließlich mit separierender Wirkung angenommen. Außerdem werden andere Typen von Shotübergängen ignoriert, obwohl in der **VERÖFFENTUCHUNG VI** von Lu, X., Ma, Y.-F., Zhang, H.-J., and Wu, L. (2002) "An integrated correlation measure for semantic video segmentation" (Proc. IEEE International Conference on Multimedia and Expo, ICME 02, Lausanne, Switzerland), erwähnt wird, dass WIPES bei der Segmentierung mit einer trennenden Wirkung ("disjunction") berücksichtigt werden könnten. Aber auch hier werden nicht alle Typen von Shotübergängen beachtet und ausschließlich eine trennende Wirkung berücksichtigt. Auch die Zuverlässigkeit der unterschiedlichen Typen gradueller Übergänge für die Indikation von Szenengrenzen wird nicht näher untersucht. Eine Integration findet ausschließlich für das in der **VERÖFFENTLICHUNG VI** beschriebene kohärenzbasierte Verfahren statt. In der **VERÖFFENTLICHUNG VII** von Aigrain, P., Joly, P., Longueville, V. (1997) "Medium knowledge-based macro-segmentation of video into sequences" (In M. T. Maybury, ed., Intelligent Multimedia Information Retrieval. AAAI/MIT Press) werden zwei Regeln (Transition Effect Rules 1 und 3) in Bezug auf Szenengrenzen definiert. Regel 1: für jeden einzeln stehenden graduellen Shotübergang wird eine Szenengrenze eingefügt. Regel 2: für jede Reihe von graduellen Shotübergängen wird davor und dahinter ggfs. eine Szenengrenze eingefügt. Problematisch ist aber, dass hierbei jeder graduelle Übergang als gleichsam zuverlässiger Indikator für Szenengrenzen verwendet wird und auch falsch durch die automatische Shotdetektion vorher erkannte graduelle Übergänge als Szenengrenzen markiert werden. Durch diese starren Regeln ist das Verfahren nicht robust genug.

Weiterhin gibt es verschiedene Szenenerkennungsverfahren, die ein oder mehrere Videobilder pro Shot nutzen, um die Ähnlichkeit zwischen zwei benachbarten Shots zu ermitteln. Besteht eine große Ähnlichkeit (in Relation zu einem vorgegebenen Schwellwert), so wird impliziert, dass beide Shots einer gemeinsamen Szene angehören. Die Shotgrenze zwischen den beiden Shots wird nicht als Szenengrenze erkannt. Besteht keine große Ähnlichkeit, wird die Shotgrenze als Szenengrenze erkannt. Sowohl in der **VERÖFFENTLICHUNG VII** von Hanjalic, A., Lagendijk, R. L., Biemond, J. (1999): "Automated high-level movie segmentation for advanced video-retrieval systems" (IEEE Trans. on Circuits and Systems for Video Technology, 9(4):580-588) als auch in der **VERÖFFENTLICHUNG IX** von Rui, Y., Huang, T. S., Mehrotra, S. (1999): "Constructing table-of-content for videos" (Multimedia Syst, 7(5):359-368) werden jeweils exakt zwei Videobilder zur Ähnlichkeitsanalyse genutzt. Dabei werden grundsätzlich immer das erste und das letzte Bild in einem Shot gewählt. Graduelle Shotübergänge werden dabei nicht berücksichtigt.

Ein-weiteres-kohärenzbasiertes Verfahren zur Szenenerkennung wird in der **VERÖFFENTLICHUNG X**, von Truong, B. T., Venkatesh, S., and Dorai, C. (2002): "Neighborhood coherence and edge based approach for scene extraction in films", in IEEE International Conference on Pattern Recognition (ICPR'2002), volume 2, pages 350-353, Quebec beschrieben. Hierin werden für alle Kohärenzwerte unterhalb eines festen Schwellwertes Szenengrenzen eingefügt.

Die genannten Ansätze zur Ermittlung von Shotgrenzen als Szenengrenzen, von denen die vorliegende Erfindung als nächstliegendem Stand der Technik ausgeht, basieren jedoch auf starren, festen Regeln und teilweise auf Schwellwerten und produzieren Fehler bei der Erkennung von Szenengrenzen, sobald die untersuchten Bildfolgen nicht diesen Regeln oder Schwellwerten unterliegen. Außerdem nutzen diese Ansätze die in einem Video zur Szenensegmentierung zur Verfügung stehenden Informationen nur ungenügend.

## AUFGABENSTELLUNG

Die **AUFGABE** für die vorliegende Erfindung ist daher darin zu sehen, das eingangs beschriebene gattungsgemäße automatisierte Verfahren zur zeitlichen Segmentierung eines Videos in Szenen durch Zusammenfassung von Bildfolgen so weiterzubilden, dass Fehler bei der Erkennung von Szenengrenzen weitgehend vermieden und damit die Genauigkeit und die Robustheit des Verfahrens deutlich verbessert werden. Dabei soll das Verfahren einfach implementierbar und zeitnah durchführbar sein. Die erfindungsgemäße LÖSUNG für diese Aufgabe ist dem Verfahrensanspruch zu entnehmen. Vorteilhafte Weiterbildungen werden in den Unteransprüchen aufgezeigt und im Folgenden im Zusammenhang mit der Erfindung näher erläutert.

Eine wesentliche Verbesserung der richtigen Erkennung von Bildfolgengrenzen als Szenengrenzen wird bei dem erfindungsgemäßen Verfahren bereits alleine dadurch erreicht,-dass-die Feststellung der Ähnlichkeit zwischen jeweils zwei Bildfolgen (Ähnlichkeitsanalyse) durch Auswahl und Vergleich von repräsentativen Videobildern aus jeder Bildfolge erfolgt, die zeitlich soweit wie möglich auseinander sind, um die visuelle Variabilität des Bildinhalts optimal abzudecken. Gleichzeitig müssen sie aber außerhalb von graduellen Übergängen liegen. Dies ist notwendig, da die Ähnlichkeit zweier Videobilder außerhalb gradueller Übergänge stark variiert von der Ähnlichkeit zweier Videobilder innerhalb von graduellen Übergängen. Die Wahl von repräsen-tativen Videobildern innerhalb von graduellen Übergängen führt zu Fehlinterpretationen bei der Szenengrenzensuche.

Um die für die Ähnlichkeitsanalyse zu verwendenden repräsentativen Videobilder entsprechend auswählen zu können, müssen Lage und Dauer der jeweils auftretenden Übergänge an den Bildfolgengrenzen bekannt sein. Abrupte Übergänge vom Typ CUT haben hierbei eine Dauer von 0 (Null) Videobildern, da hier ein abrupter Wechsel zwischen zwei aufeinander folgenden Videobildern stattfindet. Graduelle Übergänge haben eine endliche Dauer von $x > 0$ Videobildern.

Falls die verwendeten Verfahren zur Ermittlung der Bildfolgengrenzen keine oder fehlerbehaftete Angaben über die Dauer der Übergänge liefern, ist es vorteilhaft, repräsentative Videobilder auszuwählen, die zumindest eine Anzahl von $x$ Videobildern vor oder hinter der jeweiligen Bildfolgengrenze liegen. Beispielsweise kann $x = 5$ angegeben werden. Hierbei wird bei fehlerhaft zu kurz erkannter Übergangsdauer vermieden, dass repräsentative Videobilder innerhalb des graduellen Übergangs ausgewählt werden bzw. zumindest sichergestellt, dass die repräsentativen Videobilder nicht zu nahe an den Bildfolgengrenzen in der Mitte gradueller Übergänge liegen. Hierbei können die gewählten repräsentativen Videobilder vorteilhaft zur Ähnlichkeitsanalyse genutzt werden und die Robustheit der Szenengrenzenerkennung gegenüber Fehlern bei der Erkennung der Bildfolgengrenzen und Übergänge wird verbessert.

Die Anzahl der zu wählenden repräsentativen Videobilder ist nicht zwingend vorgegeben. Sie kann zwischen einem Videobild pro Bildfolge und der Anzahl der in einer Bildfolge vorhandenen Videobilder liegen. Z.B. können für jede Bildfolge genau zwei repräsentative Videobilder gewählt werden. Obige Regeln bedeuten dann, dass sie möglichst weit voneinander entfernt liegen sollen, also ein Videobild vom Anfang der Bildfolge und eines vom Ende der Bildfolge gewählt wird, wobei sie mindestens $x$ (z.B. $x = 5$) Bilder von der Bildfolgengrenze entfernt, zusätzlich aber auch außerhalb der Übergänge liegen müssen.

Das zuvor erläuterte erfindungsgemäße Vorgehen, im Folgenden auch als "erste erfindungsgemäße Maßnahme" bezeichnet, erbringt bereits eine wesentliche Verbesserung bei der Fehlervermeidung zur korrekten Erkennung von Szenengrenzen durch eine Berücksichtigung der Länge von Übergängen an den Bildfolgengrenzen. Die Fehlerrate kann jedoch auch deutlich verringert werden, wenn erfindungsgemäß eine filmgrammatik- und wahrscheinlichkeitsbasierte Berücksichtigung aller Typen von Übergängen bezüglich deren separierender oder verbindender Wirkung auf die umgebenden Bildfolgen und unterschiedlich gewichtete Einbeziehung der Wirkungen der unterschiedlichen Typen von Übergängen in die Zusammenfassung von Bildfolgen zu Szenen durchgeführt wird.

Dabei kann diese "zweite erfindungsgemäße Maßnahme" alternativ oder zusätzlich zu der zuvor erläuterten ersten erfindungsgemäßen Maßnahme durchgeführt werden. Werden beide erfindungsgemäßen Maßnahmen gemeinsam durchgeführt, kann eine optimale Reduzierung der Fehlerrate bei der automatisierten Erkennung von Szenengrenzen erreicht werden.

Bei der zweiten erfindungsgemäßen Maßnahme werden

- alle Typen von Übergängen mit einer entsprechenden, evtl. unterschiedliche Gewichtung bei der Bestimmung von Bildfolgengrenzen als Szenengrenzen einbezogen, was einer Interpretation der dem Video zugrunde liegenden Filmgrammatik entspricht,
- sowohl die separierende als auch die verbindende Wirkung von Übergängen zwischen benachbarten Bildfolgen beachtet und
- diese unterschiedlichen Wirkungen der Übergänge wahrscheinlichkeitsbasiert in die Entscheidung bei existierenden Szenenerkennungsverfahren eingebracht.

Diese zweite erfindungsgemäße Maßnahme beruht auf der Erkenntnis, dass Übergänge, insbesondere graduelle Übergänge, die häufig vom Editor eines Videos bewusst entsprechend der Filmgrammatik eingesetzt werden, sowohl eine separierende als auch eine verbindende Wirkung zwischen zwei Bildfolgen haben können, sodass die entsprechende Bildfolgengrenze eine Szenengrenze sein kann oder nicht. Diese Zusammenhänge können mit Hilfe von Wahrscheinlichkeitsbetrachtungen erkannt werden.

Die nachfolgenden Erläuterungen beziehen sich auf Shots als spezielle Bildfolgen. Dies ist damit zu erklären, dass die Erkenntnisse zu den Wahrscheinlichkeitsbetrachtungen zunächst nur auf dem Gebiet der Shotdetektion und Detektion von Shotübergängen nach Länge und Typ vorliegen. Eine analoge Betrachtungsweise bei Subshots als spezielle Bildfolgen in Form von Teilmengen von Shots ist aber ohne weiteres möglich. Zur Unterstützung der entsprechenden Wahrscheinlichkeitsbetrachtungen sind dann analog die Subshotgrenzen und Übergänge heranzuziehen. Dabei ist eine Betrachtung von Subshotgrenzen immer nur dann relevant, wenn eine Szenengrenze innerhalb eines Shots liegt.

Die **TABELLE 1** zeigt eine Auflistung der Szenen- und Shotgrenzen in Abhängigkeit von der Art des Videos, in dem sie auftreten (mit opt: optionale weitere Szenengrenzen, # Anzahl), durchgeführt an einem Testset unterschiedlicher ausgewählter Sendungen.

**TABELLE 1**

| Art | Länge h:min:s | #Szenengrenzen sb | | |
|---|---|---|---|---|
| | | #sb | #opt sb | #Shotgrenzen |
| Spielfilm + Werbung | 1:00:00 | 73 | 28 | 869 |
| Kindersendung | 0:27:34 | 14 | 6 | 302 |
| | 0:26:25 | 18 | 3 | 321 |
| Sitcom | 0:46:52 | 21 | 12 | 645 |
| | 0:41:13 | 31 | 8 | 557 |
| | 0:22:13 | 11 | 7 | 176 |
| Zeichentrick | 0:20:31 | 18 | 8 | 175 |
| | 0:23:34 | 15 | 3 | 147 |
| **total** | **4:28:22** | **201** | **75** | **3192** |

Eine Auswertung der zunächst automatisch detektierten und dann von Hand korrigierten Shotgrenzen ergab folgende Zuordnung zu den einzelnen Typen von Shotübergängen gemäß TABELLE 2. Dabei bezeichnet P(sttype) die Wahrscheinlichkeit, dass ein bestimmter Typ von Shotübergang in einer speziellen Sendung auftritt, oder genauer, dass ein in einer speziellen Sendung auftretender Shotübergang vom Typ CUT, FADE, DISSOLVE bzw. WIPE ist.

**TABELLE 2**

| P(sttype) | CUT | FADE | DISSOLVE | WIPE |
|---|---|---|---|---|
| Spielfilm + Werbung | 88.95% | 3.68% | 4.95% | 2.42% |
| Kindersendung | 91.33% | 4.49% | 2.57% | 1.61% |
| Sitcom | 96.81% | 1.45% | 1.67% | 0.07% |
| Zeichentrick | 90.99% | 3.73% | 5.28% | 0.00% |
| **total** | **93.01%** | **2.88%** | **3.10%** | **1.00%** |

Die im Testset auftretenden Shotübergänge sind zu 93,01% vom Typ CUT, zu 2,88% vom Typ FADE, zu 3.1% vom Typ DISSOLVE und zu 1% vom Typ WIPE.

Die **TABELLE 3** zeigt auf, wie groß die Wahrscheinlichkeit ist, dass ein spezieller Typ von Shotübergang an einer Szenengrenze auftritt. Genauer gesagt ist P(sttype | scb) in **TABELLE 3** die bedingte Wahrscheinlichkeit, dass ein bestimmter Typ von Shotübergang vorliegt, wenn der Shotübergang gleichzeitig eine Szenengrenze ist.

TABELLE 3

| P(sttype \| scb) | CUT | FADE | DISSOLVE | WIPE |
|---|---|---|---|---|
| Spielfilm + Werbung | 52.48% | 29.70% | 1.98% | 15.84% |
| Kindersendung | 17.07% | 68.29% | 9.76% | 4.88% |
| Sitcom | 61.11% | 21.11% | 17.78% | 0.00% |
| Zeichentrick | 40.91% | 25.00% | 34.09% | 0.00% |
| **total** | **48.19%** | **31.88%** | **13.41%** | **6.52%** |

Die im Testset mit Szenengrenzen zusammenfallenden Shotgrenzen sind zu 48,19% vom Typ CUT, zu 31,88% vom Typ FADE, usw. Werden die Wafirsch-einlichkeiten P(sttype | scb) gemäß **TABELLE 3** mit den Wahrscheinlichkeiten P(sttype) gemäß **TABELLE 2**, d.h. mit dem Gesamtauftreten (Zeile "Total") verschiedener Typen von Shotübergängen verglichen, ergibt sich, dass die Wahrscheinlichkeit, dass ein gradueller Shotübergang an einer Szenengrenze auftritt, sehr viel höher ist als ihr generelles Auftreten. Hingegen ist für Übergänge vom Typ CUT das Gegenteil der Fall.

Die **TABELLE 4** zeigt die bedingte Wahrscheinlichkeit P(scb | sttype), dass eine Szenengrenze auf einem speziellen Typ von Shotübergang liegt.

TABELLE 4

| P(scb \| sttype) | CUT | FADE | DISSOLVE | WIPE |
|---|---|---|---|---|
| Spielfilm + Werbung | 6.86% | 93.75% | 4.65% | 76.19% |
| Kindersendung | 1.23% | 100.00 % | 25.00% | 20.00% |
| Sitcom | 4.12% | 95.00% | 69.57% | 0.00% |
| Zeichentrick | 6.14% | 91.67% | 88.24% | - |
| **total** | **4.48%** | **95.65%** | **37.37%** | **56.25%** |

Wenn der Typ des Shotübergangs nicht bekannt ist, beträgt die Chance, dass eine Szenengrenze auf einem vorgegebenen Shotübergang liegt, P(scb) = 8,65% (201 sichere und 75 optionale Szenengrenzen geteilt durch 3192 Shotgrenzen, (vergleiche **TABELLE 1**). Ist der Typ des Shotübergangs aber bekannt, beträgt die Wahrscheinlichkeit, dass eine Szenengrenze auf dem entsprechenden Shotübergang liegt, 4,48% für CUTS, 95,65% für FADES, 37,37% für DISSOLVES und 56,25% für WIPES. Nahezu jeder FADE ist somit eine Szenengrenze.

Die Ergebnisse der **TABELLEN 2** bis **4** zeigen, dass in den meisten Sendungen Shotübergänge nicht zufällig, sondern mit Bedacht beim Editieren eingesetzt werden. Insbesondere graduelle Shotübergänge (FADE, DISSOLVE, WIPE) scheinen oft genutzt zu werden, um wichtige Inhaltsänderungen anzuzeigen, die dann mit Szenengrenzen korrelieren.

Als Filmgrammatik werden die allgemein verwendeten Regeln und Konventionen bei der Erstellung von Filmen und Videos bezeichnet. Eine Filmgrammatik wird bewusst als stilistisches Mittel zur Komposition und beim Editieren eingesetzt. Wie durch die Betrachtung der Wahrscheinlichkeiten (Tabellen 2 bis 4) gezeigt, werden graduelle Shotübergänge beispielsweise eingesetzt, um globale Änderungen (insbesondere Szenenwechsel) anzuzeigen. Die Filmgrammatik hat dadurch einen direkten Bezug zum Inhalt. Die auftretenden Übergänge sind entsprechend inhaltsbezogen. Bei Videos, die nicht entsprechend der Filmgrammatik editiert wurden (beispielsweise ungeschnittene Homevideos), oder bei solchen Filmen, bei denen graduelle Übergänge zwischen Bildfolgen als rein künstlerisches Element ohne einen Bezug zum Inhalt oder bewusst kontradiktorisch zum Inhalt eingesetzt werden, führt nur die erste erfinderische Maßnahme zu einer deutlichen Verbesserung der Szenerkennung, da diese Maßnahme unabhängig von einer Filmgrammatik ist. Während also auch bei diesen Videos die erfindungsgemäße Auswahl von repräsentativen Videobildern außerhalb von Übergängen die Fehlerrate bei der Erkennung von Szenengrenzen verringert, ist die zweite Maßnahme nach der Erfindung der wahrscheinlichkeitsbasierten Gewichtung von separierender und verbindender Wirkung unterschiedlicher Übergangstypen in der Regel kontraproduktiv, da hier kein Bezug zwischen auftretenden Übergangstypen und dem Inhalt besteht.

Um das Verfahren nach der Erfindung mit beiden genannten Maßnahmen zur Erreichung einer optimalen Szenensegmentierung anwenden zu können, ist es daher vorteilhaft, vorher bei dem zu segmentierenden Video zu überprüfen, ob es entsprechend der Filmgrammatik editiert wurde und die auftretenden Übergangstypen einen Bezug zum Videoinhalt haben. Dies wird bei der Erfindung bevorzugt daran erkannt, dass eine positive Korrelation zwischen graduellen Übergängen und Szenengrenzen festgestellt werden kann oder eine Reihe aufeinander folgender Bildfolgen durch graduelle Übergänge verbunden ist. Bevorzugt kann also eine Überprüfung der Inhaltsbezogenheit der Übergangstypen zwischen den Bildfolgen durch Ermittlung einer Beziehung zwischen graduellen Übergängen und Szenengrenzen oder Ermittlung einer Folge von graduellen Übergängen erfolgen. Ergibt diese automatische Überprüfung, dass das Video entsprechend der Filmgrammatik editiert und mit graduellen Übergängen zwischen den Bildfolgen versehen wurde, so werden beide Maßnahmen nach der Erfindung angewendet. Anderenfalls wird nur die erste Maßnahme nach der Erfindung zur verbesserten Auswahl der repräsentativen Videobilder angewendet.

**AUSFÜHRUNGSBEISPIELE**

Weitere Erläuterungen zu dem erfindungsgemäßen Verfahren und zu bevorzugten, vorteilhaften Modifikationen davon sind dem nachfolgenden speziellen Beschreibungsteil zu entnehmen und werden nachfolgend anhand der schematischen Figuren näher erläutert. Dabei zeigt:

**FIGUR 1A**    Bildwahl innerhalb eines graduellen Übergangs, Stand der Technik,
**FIGUR 1B**    Bildwahl außerhalb eines graduellen Übergangs,
**FIGUR 2**    Diagramm der Anziehung des Übergangs k mit Berücksich- tigung der separierenden Wirkung,
**FIGUR 3A**    Diagramm zur kohärenzbasierten Szenensegmentierung, Stand der Technik,
**FIGUR 3B**    Diagramm zur ähnlichkeitsbasierten Szenensegmentierung ("Overlapping Links"), Stand der Technik,
**FIGUR 3C**    Diagramm zur ähnlichkeitsbasierten Szenensegmentierung ("time adaptive Grouping"), Stand der Technik,
**FIGUR 4**    Diagramm der Anziehung des Übergangs k mit Berücksich- tigung der separierenden und verbindenden Wirkung,
**FIGUR 5A**    Sequenz einer Bildfolge mit Etablishing-Shots C,D,

**FIGUR 5B**    kohärenzbasierte Szenensegmentierung ohne Maßnahmen nach der Erfindung,
**FIGUR 5C**    Diagramm der Anziehung des Übergangs k mit Berücksich- tigung der separierenden Wirkung,
**FIGUR 5D**    gemäß Figur 5C modifizierte kohärenzbasierte Szenenseg- mentierung,
**FIGUR 5E**    Diagramm der Anziehung des Übergangs k mit Berücksich- tigung der separierenden und verbindenden Wirkung,
**FIGUR 5F**    gemäß Figur 5E modifizierte kohärenzbasierte Szenenseg- mentierung,
**FIGUR 6A**    Sequenz von Bildfolgen, die durch DISSOLVES verbunden sind,
**FIGUR 6B**    kohärenzbasierte Szenensegmentierung ohne Maßnahmen,
**FIGUR 6C**    Diagramm der Anziehung des Übergangs k mit Berücksich- tigung der separierenden Wirkung,
**FIGUR 6D**    gemäß Figur 6C modifizierte kohärenzbasierte Szenenseg- mentierung,
**FIGUR 6E**    Diagramm der Anziehung des Übergangs k mit Berücksich- tigung der separierenden und verbindenden Wirkung und
**FIGUR 6F**    gemäß 6E modifizierte kohärenzbasierte Szenenseg- mentierung und
**FIGUR 7**    Flussdiagramm zur Entscheidung über die Nutzung von graduellen Übergängen entsprechend der Filmgrammatik.

**AUSWAHL DER BESTEN REPRÄSENTATIVEN VIDEOBILDER FÜR DIE ÄHNLICHKEITSANALYSE.**

Zur Durchführung einer Ähnlichkeitsanalyse zwischen zwei Bildfolgen A und B können verschiedene Ähnlichkeitsmaße verwendet werden. Im Allgemeinen wird die Ähnlichkeit zwischen repräsentativen Videobildern der beiden Bildfolgen bestimmt. Hierzu werden X repräsentative Videobilder $kf_{Ax}$ aus Bildfolge A und Y repräsentative Videobilder $kf_{By}$ aus Bildfolge B gewählt. Als Ähnlichkeitsmaß kann dann beispielsweise die Farb- oder Kantenähnlichkeit verwendet werden. Es gilt:

$$sim(shotA, shotB) = \max_{x=[1,X], y=[1,Y]} sim(kf_{Ax}, kf_{By}) \ . \qquad (1)$$

Das heißt, die maximale Ähnlichkeit zweier beliebiger repräsentativer Videobilder aus den beiden Bildfolgen bestimmt die Ähnlichkeit der Bildfolgen.

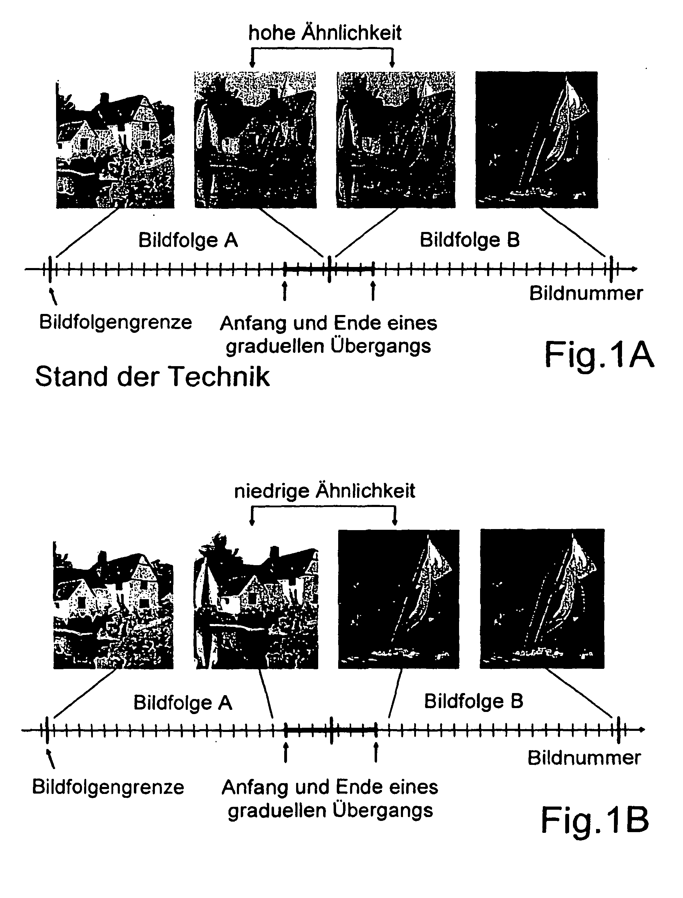

Bekannte Verfahren zur Ähnlichkeitsanalyse nutzen dazu genau das erste und das letzte Bild in einer Bildfolge, weil durch diese Bilder die Veränderungen im Bildinhalt innerhalb einer Bildfolge am besten repräsentiert werden. Folgt aber Bildfolge B direkt auf Bildfolge A und liegt ein gradueller Übergang (FADE, DISSOLVE oder WIPE) an der Grenze zwischen den beiden betrachteten Bildfolgen, dann kann das letzte Bild von Bildfolge A dem ersten Bild von Bildfolge B sehr ähnlich sein, vergleiche **FIGUR 1A**. Dementsprechend würden die bekannten Methoden die beiden Bildfolgen als sehr ähnlich bewerten und dadurch zur gleichen Szene zuordnen. Eine evtl. vorhandene Szenengrenze würde nicht erkannt werden.

Bei der Erfindung werden deshalb grundsätzlich nur Videobilder außerhalb von Übergängen zwischen Bildfolgen ausgewählt. Dazu ist die Kenntnis über Typ und Länge eines Übergangs erforderlich. Diese können aber, wie oben bereits ausgeführt, mit speziellen Verfahren detektiert werden. Dann können Videobilder für die Ähnlichkeitsanalyse direkt vor und hinter dem Übergang, d.h. außerhalb des Übergangs genutzt werden. Graduelle Übergänge zwischen Bildfolgen stören die Ähnlichkeitsanalyse nicht mehr (vergleiche **FIGUR 1 B**). Ist keine Kenntnis über die genaue Länge eines graduellen Übergangs vorhanden, können auch Erfahrungswerte dafür herangezogen werden. Als Kompromiss kann postuliert werden, dass die auszuwählenden Videobilder einer Anzahl x, beispielsweise x = 5, von Videobildern von der Bildfolgengrenze entfernt liegen sollen.

Durch die spezielle Auswahl nach der Erfindung der besten repräsentativen Videobilder für die Ähnlichkeitsanalyse können fast alle bekannten Verfahren zur Erkennung von Szenengrenzen verbessert werden, da sie fast immer auf der Ähnlichkeitsanalyse von Bildfolgen beruhen.

## NUTZUNG VON GRADUELLEN ÜBERGÄNGEN ZWISCHEN BILDFOLGEN ZUR SZENENTRENNUNG.

Im Folgenden bezeichnet P(scb) die Wahrscheinlichkeit, dass eine Szenengrenze auf einer Bildfolgengrenze beliebigen Typs liegt. P(scb | sttype) bezeichnet die bedingte Wahrscheinlichkeit, dass eine Szenengrenze auf einer Bildfolgengrenze mit einem bekannten Übergang liegt, wobei der Typ des Übergangs sttype aus der Menge {CUT. FADE, DISSOLVE, WIPE} stammt. Für die Wahrscheinlichkeiten ergibt sich gemäß **TABELLE 4** und der Beschreibung darunter (P(scb) = 8,65%):

$$P(scb) > P(scb \mid CUT) \qquad (2)$$

$$P(scb) < P(scb \mid FADE) \qquad (3)$$

$$P(scb) < P(scb \mid DISSOLVE) \qquad (4)$$

$$P(scb) < P(scb \mid WIPE) \qquad (5)$$

Durch diese Wahrscheinlichkeitsverteilung wird deutlich, dass der jeweilige Typ von Übergang eine Information über eine mögliche Szenengrenze in sich trägt. Diese Information wird bei der Erfindung für eine verbesserte Szenendetektion eingesetzt.

Es wird die Anziehung $stta_{t,sep}(k)$ für die Anziehungswirkung von Übergängen zwischen Bildfolgen definiert. Diese Funktion ordnet jedem Übergang k zwischen der Bildfolge k und der Bildfolge k+1 in Abhängigkeit von seinem Typ einen Anziehungswert attr zu. Der Index t steht für Übergang ("Transition"), der Index sep für die separierende Wirkung des Übergangs. Es werden folgende Anziehungswerte attr definiert:

$$(6)$$

$stta_{t,sep}(k) = attr_{CUT}$, wenn der Übergang k vom Typ CUT ist,

$stta_{t,sep}(k) = attr_{FADE}$, wenn der Übergang k vom Typ FADE ist,

$stta_{t,sep}(k) = attr_{DIS}$, wenn der Übergang k vom Typ DISSOLVE ist,

$stta_{t,sep}(k) = attr_{WIPE}$, wenn der Übergang k vom Typ WIPE ist und

$stta_{t,sep}(k) = attr_{SUBSHOT}$, wenn der Übergang k ein Übergang zwischen zwei untergeordneten Bildfolgen der gleichen übergeordneten Bildfolge ist (Subshot).

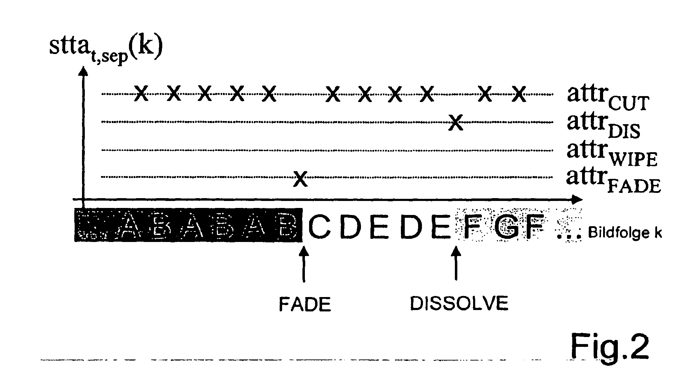

Die Anziehung $stta_{t,sep}(k)$ gibt an, welche Anziehungskraft jeder Übergangstyp auf seine direkte Umgebung ausübt. Ein hoher Wert hält die Bildfolgen zusammen (keine Szenengrenze), ein niedriger Wert separiert die Bildfolgen in einzelne Szenen. Die **FIGUR 2** zeigt verschiedene Werte für die Anziehung $stta_{t,sep}(k)$ für eine Folge von Bildfolgen mit Übergängen in Form von CUTS, einem FADE und einem DISSOLVE und die weiteren entsprechenden Parameter.

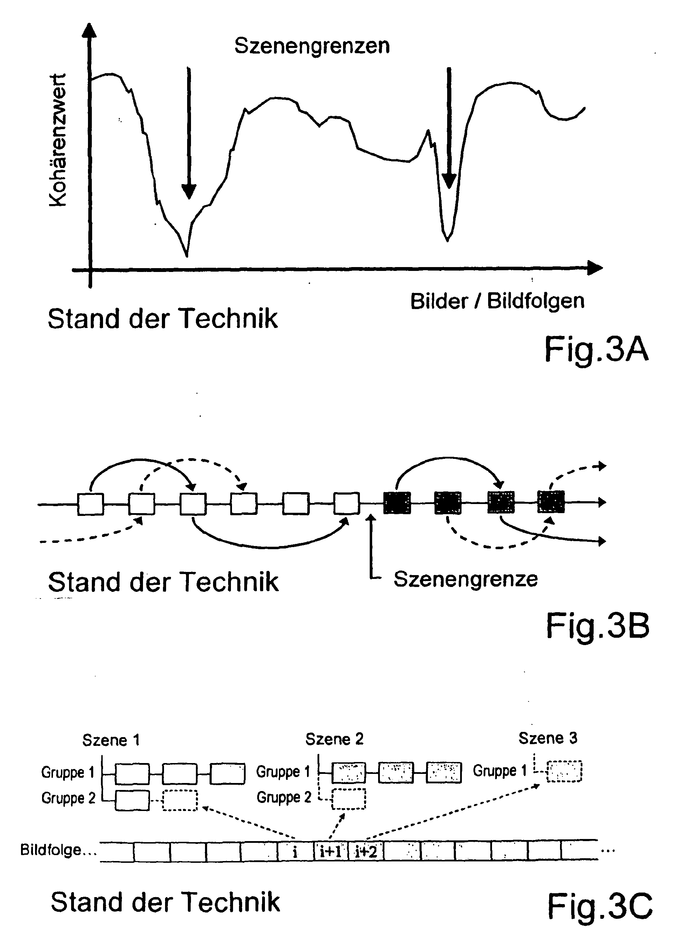

Folgend wird die Integration in kohärenzbasierte Verfahren zur Erkennung von Szenengrenzen gezeigt. Die Integration besteht darin, dass die Kohärenzfunktion coh(k) in den bekannten Verfahren (die **FIGUR 3A** zeigt eine Kohärenzfunktion, minimale Werte zeigen Szenengrenzen an) durch eine modifizierte Version $coh_{mod}(k)$ ersetzt wird. Die Modifikation kann nach folgender Formel vorgenommen werden:

$$coh_{mod}(k) = \alpha\, coh(k) + \beta\, stta_{t,sep}(k) \qquad (7)$$

Dabei ist coh(k) die Kohärenz von Bildfolgen vor dem Übergang k mit Bildfolgen hinter Übergang k, wie sie durch bekannte Verfahren aus dem Stand der Technik berechnet werden. Dabei sind α, β Wichtungsfaktoren und geben an, wie stark der Einfluss der separierenden Wirkung von graduellen Übergängen bei der Szenenerkennung ist. Sie können beispielsweise 0,5 betragen.

Ebenso kann eine Integration der Anziehung $stta_{t,sep}(k)$ in Detektionsverfahren erfolgen, die auf einer Analyse der Ähnlichkeit zwischen Bildfolgen basieren (ähnlichkeitsbasierte Szenensegmentierung; die **FIGUR 3B** zeigt ein Beispiel zu "Overlapping-Links", die **FIGUR 3C** ein Beispiel zur zeitadaptiven Gruppierung - "time adaptive Grouping"). Die Integration besteht auch hier darin, die Ähnlichkeitsfunktion sim(i,j) in den bekannten Verfahren durch die modifizierte Ähnlichkeitsfunktion $sim_{mod}(i,j)$ zu ersetzen. Die Indices i und j bezeichnen die beiden Bildfolgen, deren Ähnlichkeit bestimmt wird. Es gilt:

$$sim_{mod}(i, j) = \alpha\, sim(i, j) + \beta\, stta_{s,sep}(i, j) \qquad (8)$$

mit

$$stta_{s,sep}(i, j) = \min_{k=i}^{j-1} stta_{t,sep}(k) \qquad (9)$$

Bei der Integration in ähnlichkeitsbasierte Szenensegmentierung nimmt die Anziehung $stta_{s,sep}(i, j)$ zwischen den Bildfolgen i und j immer den minimalen Anziehungswert aller zwischen den Bildfolgen i und j auftretenden Übergänge k an (Gleichung 9). Dies bedeutet, dass der Übergang zwischen den Bildfolgen i und j mit der stärksten separierenden Wirkung die Modifikation der Ähnlichkeitsfunktion bestimmt (Gleichung 8). Die Wichtungsfaktoren α, β haben wiederum dieselbe Bedeutung wie bei der kohärenzbasierten Ähnlichkeitsanalyse und können auch die gleichen Werte (α, β = 0,5) annehmen.

Die Bestimmung der konkreten, konstanten Anziehungswerte attr erfolgt wahrscheinlichkeitsbasiert. Sie bestimmen den Einfluss der verschiedenen Typen von Bildfolgenübergängen auf die Szenensegmentierung. Wenn die Gleichungen (7) oder (8) genutzt werden, ist die Wahrscheinlichkeit, dass eine dezidierte Szenengrenze $scb_{decl}$ an einem vorgegebenen Übergang liegt, eine Funktion von $stta_{t,sep}(k)$. Die originalen Werte von Kohärenz und Ähnlichkeit werden in nachfolgender Gleichung durch die Variable ν berücksichtigt:

$$P(scb_{decl} \mid k) = f(stta_{t,sep}(k), \nu) \qquad (10)$$

Je kleiner der Wert $stta_{t,sep}(k)$ für einen vorgegebenen Bildfolgenübergang k ist, desto größer ist die Wahrscheinlichkeit, dass es sich hierbei um eine dezidierte Szenengrenze $scb_{decl}$ handelt.

Wie der **TABELLE 4** entnommen werden kann, korrespondiert die Wahrscheinlichkeit einer Szenengrenze mit dem Typ des Übergangs (P(scb | sttype)).

Um dieses Wissen in die Erfindung zu integrieren, werden folgende Anziehungswerte attr für die Anziehung $stta_{sep}(k)$ definiert:

$$stta_{l,sep}(k) = attr_{CUT} = \quad (P(scb/CUT)/P(scb/CUT), \quad (11)$$

wenn der Übergang k vom Typ CUT ist,

$$stta_{l,sep}(k) = attr_{FADE} = \quad (P(scb/CUT)/P(scb/FADE), \quad (12)$$

wenn der Übergang k vom Typ FADE ist,

$$stta_{l,sep}(k) = attr_{DIS} = \quad (P(scb/CUT)/P(scb/DISSOLVE), \quad (13)$$

wenn der Übergang k vom Typ DISSOLVE ist,

$$stta_{l,sep}(k) = attr_{WIPE} = \quad (P(scb/CUT)/P(scb/WIPE), \quad (14)$$

wenn der Übergang k vom Typ WIPE ist,
und

$$stta_{l,sep}(k) = attr_{SUBSHOT} \quad =(P(scb/CUT)/P(scb/CUT) = attr_{CUT,} \quad (14A)$$

wenn der Übergang k ein Übergang zwischen zwei Subshots innerhalb eines Shots ist.

Mit dem den vorliegenden Ausführungen zugrunde liegenden Testset für verschiedene Sendeformate und einer Bildfolgenaufteilung in Shots ergeben sich die Werte: $attr_{CUT}$ = 1,0; $attr_{FADE}$ = 0,047; $attr_{DIS}$ = 0,120 und $attr_{WIPE}$ = 0,080.

## NUTZUNG VON GRADUELLEN ÜBERGÄNGEN ZUR UNTERDRÜCKUNG VON SZENENGRENZEN.

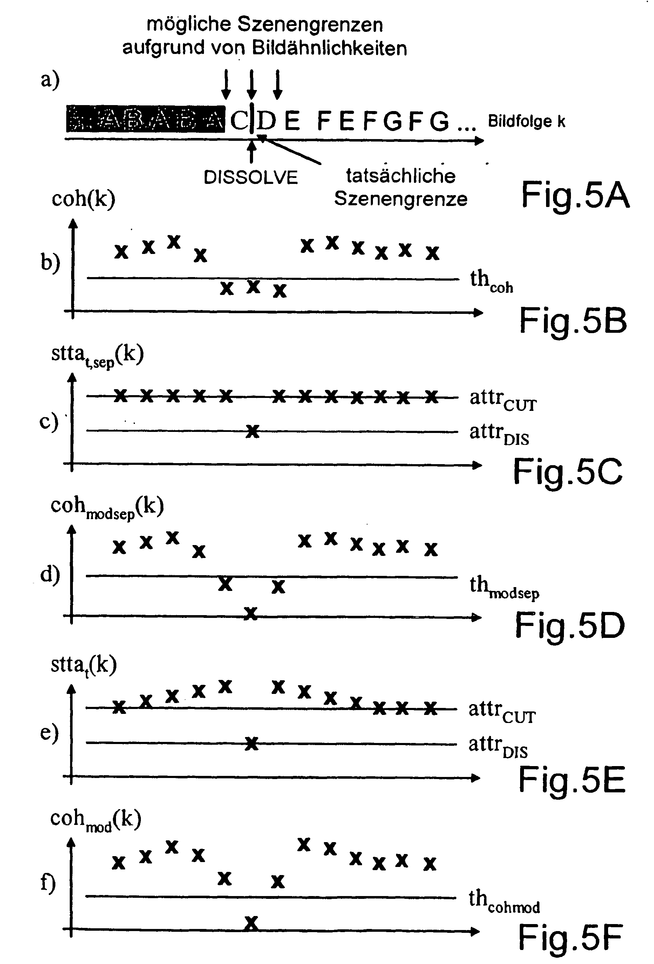

Graduelle Shotübergänge (FADE, DISSOLVE, WIPE) werden häufig zur Szenentrennung eingesetzt. Daher kann die Anwesenheit dieser graduellen Übergänge in der Regel als Hinweis auf eine Szenengrenze interpretiert werden. Das bedeutet gleichzeitig, dass es sehr unwahrscheinlich ist, in der Umgebung eines graduellen Übergangs eine weitere Szenengrenze anzufinden, da Szenen eine gewisse Länge benötigen, um vom Zuschauer als semantische Einheit erkannt zu werden. Daher haben graduelle Übergänge eine verbindende Wirkung auf Paare von Bildfolgen, die entweder vollständig vor oder hinter dem graduellen Übergang liegen. Dieser Fakt wird bei keinem bisher bekannten Verfahren zur Erkennung von Szenengrenzen genutzt. Ein typisches Beispiel, bei dem die bekannten Verfahren zur Szenenerkennung häufig versagen sind so genannte "establishing shots", die die Einleitung oder eine Übersicht zu einer Szene bilden und damit zur Szene gehören. (Z.B. Außenansicht eines Hauses zur Info über den Ort der Szene, nach der dann visuell völlig andere Bildfolgen von Innenaufnahmen im Haus folgen). Die **FIGUR 5A** zeigt ein entsprechendes Beispiel, Bildfolgen C und D zeigen grundsätzlich andere Bildinhalte als die Bildfolgen A und B bzw. E, F und G.. Eine echte Szenengrenze befindet sich nur zwischen den Bildfolgen C und D am Übergang vom Typ DISSOLVE.

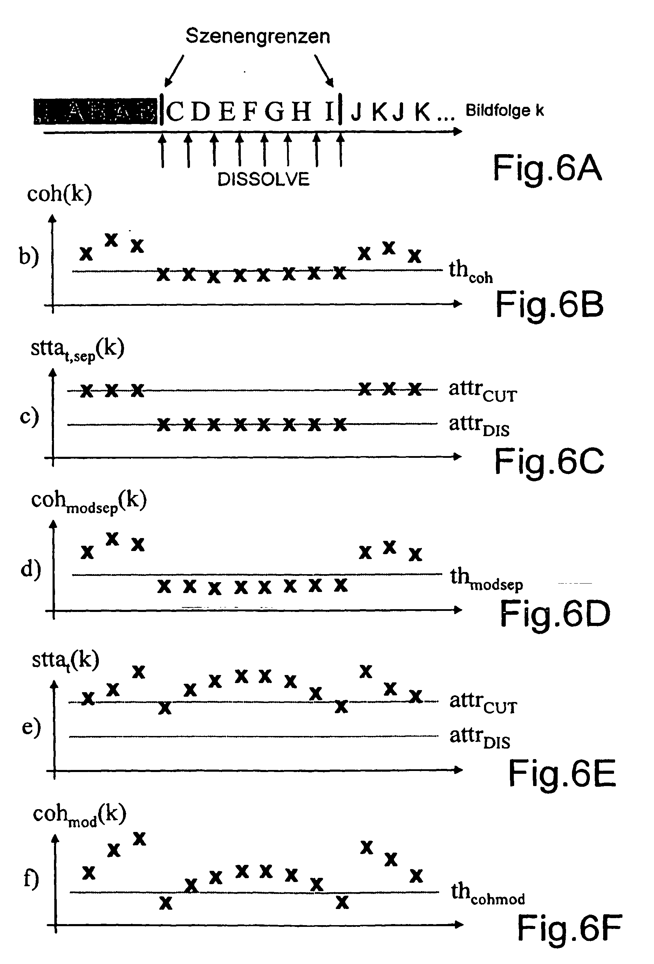

Bei einer anderen Variante des Zusammenschnitts von Bildfolgen, werden graduelle Übergänge verwendet, um die semantische Zusammengehörigkeit zwischen visuell unterschiedlichen Bildfolgen anzudeuten. Auch hier kann die verbindende Wirkung von graduellen Übergängen für die Szenenerkennung vorteilhaft genutzt werden. Die **FIGUR 6A** zeigt ein entsprechendes Ausführungsbeispiel mit einer Vielzahl von Bildfolgen mit DISSOLVES als Übergänge.

Der verbindende Effekt von graduellen Übergängen kann analog und zusätzlich zu der zuvor erläuterten Funktion der Anziehung (mit separierender Wirkung) nunmehr als Funktion der Anziehung mit verbindender Wirkung $sttä_{t,merge}(k)$ definiert werden:

$$stta_{t,merge}(k) = \sum_{i=1}^{r} f \frac{r+1-i}{r}(2 - stta_{t,sep}(k-i) - stta_{t,sep}(k+1)) \qquad (15)$$

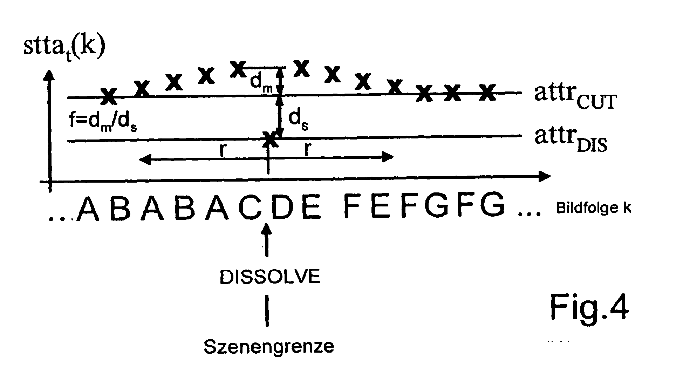

mit f = Vergleichsfaktor der verbindenden zur separierenden Wirkung, z.B. 0,2 (zur Definition von f siehe auch **FIGUR 4** mit $d_s$= Wert für separierende Wirkung entsprechend Abstand zwischen $attr_{CUT}$ und $attr_{DIS}$ und $d_m$ = Werterhöhung durch verbindende Wirkung) und r = Reichweite der verbindenden Wirkung (Anzahl der Übergänge zwischen Bildfolgen, z.B. 10).

Dabei ist festzustellen, dass die verbindende Wirkung vom verbindenden Übergang weg linear abnimmt.

**NUTZUNG VON GRADUELLEN ÜBERGÄNGEN MIT SEPARIERENDER UND VERBINDENDER WIRKUNG.**

Für die Gesamtanziehung von Übergängen mit separierender und verbindender Wirkung ergibt sich damit:

$$stta_t(k) = stta_{t,sep}(k) + stta_{t,merge}(k) \qquad (16)$$

In der **FIGUR 4** ist die Gesamtanziehung stta t(k) für Übergange vom Typ CUT und einen Übergang vom Typ DISSOLVE für f=0,5 und r=4 gemäß Gleichungen (16) und (15) dargestellt. Der Wert $stta_t(k)$ ist niedrig bei graduellen Übergängen (separierender Effekt mit Anziehungswerten $stta_t(k)$ unterhalb der Linie $attr_{CUT}$=1) und hoch bei Übergängen im Bereich r entfernt vom graduellen Übergang (verbindender Effekt mit Anziehungswerten $stta_t(k)$ oberhalb der Linie $attr_{CUT}$=1).

Mit der gemäß Gleichung (16) definierten Gesamtanziehung $stta_t(k)$ ergibt sich für die kohärenzbasierte Szenensegmentierung dann

$$coh_{mod}(k) = \alpha\, coh(k) + \beta\, stta_t(k) \qquad (17)$$

Für die ähnlichkeitsbasierte Szenensegmentierung ergibt sich:

$$sim_{mod}(i,j) = \alpha\, sim(i,j) + \beta\, stta_s(i,j) \qquad (18)$$

mit

$$stta_s(i,j) = \min_{k=i}^{j-1} stta_t(k) \qquad (19)$$

Bei der kohärenzbasierten Szenensegmentierung erniedrigt ein gradueller Übergang den Kohärenzwert für den Übergang und erhöht die Kohärenzwerte in der zeitlichen Nachbarschaft des Übergangs. Für die ähnlichkeitsbasierte Szenensegmentierung, die direkt auf der Ähnlichkeit zwischen Bildfolgen basiert, erniedrigt sich der Ähnlichkeitswert zwischen Bildfolgen auf verschiedenen Seiten des graduellen Übergangs, während sich der Ähnlichkeitswert zwischen Bildfolgen auf derselben Seite des graduellen Übergangs erhöht.

Die **FIGUREN 5** und **6** zeigen für Sequenzen von Bildfolgen die Detektion der Szenengrenzen unter Berücksichtigung der trennenden und verbindenden Wirkung der Übergänge.

Die **FIGUR 5A** zeigt eine Sequenz von Bildfolgen mit einem "Etablishing Shot" jeweils am Ende und am Anfang zweier Szenen. Visuell ähnliche Bildfolgen werden mit demselben Buchstaben bezeichnet. Die Etablishing-Shots C und D sind visuell unähnlich zu den anderen Bildfolgen. Eine auf Ähnlichkeit basierende Szenenerkennung kann nicht entscheiden, wo und wie viele Szenengrenzen eingefügt werden müssen: vor, zwischen oder hinter den Bildfolgen C und D. In der **FIGUR 5B** befinden sich alle drei Kohärenzwerte unterhalb des Schwellwertes $th_{coh}$. Auch, wenn die separierende Wirkung des graduellen Übergangs zwischen C und D wie vorbeschrieben berücksichtigt wird, zeigen die **FIGUREN 5C** und **5D**, dass es immer noch möglich ist, dass durch die Szenendetektion zusätzliche - falsche - Szenengrenzen vor und hinter den Shots C und D eingefügt werden. Wenn beide Wirkungen der Übergänge - separierend und verbindend - berücksichtigt werden, vergleiche **FIGUREN 5E** und **5F**, verändern sich die drei Kohärenzwerte für die Bildfolgengrenzen vor, zwischen und hinter den Bildfolgen C und D signifikant. Zu erkennen ist, dass nur noch der Kohärenzwert für den Übergang vom Typ DISSOLVE zwischen den beiden Bildfolgen C und D unterhalb des Schwellwerts $th_{cohmod}$ liegt und zum Setzen einer Szenengrenze führt, was den korrekten Verhältnissen entspricht.

Die **FIGUR 6A** zeigt eine Sequenz von Bildfolgen mit einer verbindenden Wirkung von einer Reihe aufeinander folgender DISSOLVES als Übergänge. Derartige Reihen werden bevorzugt zum Zusammenschneiden von visuell verschiedenartigem aber semantisch zusammenhängendem Bildmaterial eingesetzt. Die Kohärenzkurve gemäß **FIGUR 6B** zeigt, dass wenig Kohärenz zwischen den einzelnen Bildfolgen herrscht, sodass es zum Setzen von Szenengrenzen zwischen allen Bildfolgen kommen würde. Auch die Berücksichtigung der separierenden Wirkung gemäß **FIGUR 6C** führt nicht zu einem befriedigenden Ergebnis. Es ergibt sich keine veränderte Setzung von Szenengrenzen, vergleiche **FIGUR 6D**. In der **FIGUR 6E** ist hingegen zu erkennen, dass der verbindende Effekt mehrerer gradueller Übergänge in einer Reihe den separierenden Effekt kompensieren kann. Die Kohärenzwerte für die inneren graduellen Übergänge steigen bis oberhalb des Schwellwertes $th_{cohmod}$ und führen nicht mehr zu einer Setzung von Szenengrenzen, vergleiche **FIGUR 6F**. Die Berücksichtung der verbindenden Wirkung von Übergängen kann daher zur Vermeidung von Fehlern beim Auffinden von Szenengrenzen eingesetzt werden.

**ENTSCHEIDUNG, OB GRADUELLE ÜBERGÄNGE ENTSPRECHEND DER FILMGRAMMATIK GENUTZT WERDEN.**

Bereits weiter oben wurde ausgeführt, dass Übergänge gezielt entsprechend der Filmgrammatik oder kontradiktorisch oder zufällig und unbewusst eingesetzt werden können. Die zweite erfindungsgemäße Maßnahme (wahrscheinlichkeitsbasierte Beachtung und Einbeziehung von separierender bzw. verbindender Wirkung unterschiedlicher Typen von Übergängen zwischen Bildfolgen) kann nur auf solche Videos angewendet werden, in denen die Übergänge bewusst entsprechend der Filmgrammatik eingesetzt werden, da bei der Erfindung ein Zusammenhang zwischen der Filmgrammatik und den Übergängen vorausgesetzt und dann wahrscheinlichkeitsbasiert ausgewertet wird, um Szenengrenzen möglichst fehlerfrei auffinden zu können.

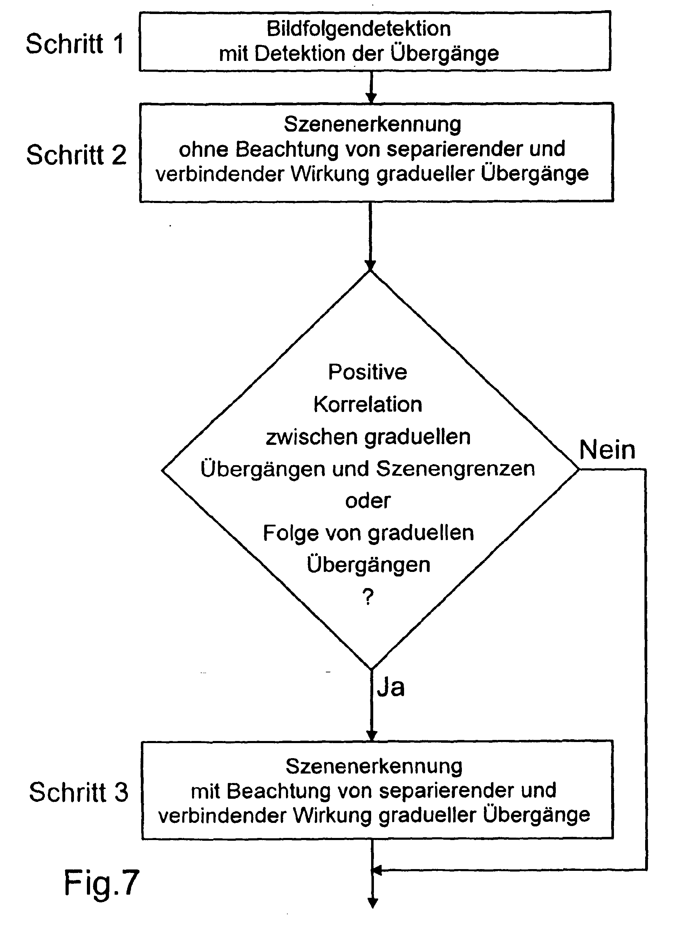

Im Folgenden wird eine allgemeine Methode (vergleiche **FIGUR 7**) erläutert, mit der unabhängig vom Typ des zu segmentierenden Videos entschieden werden kann, ob graduelle Übergänge genutzt werden, um Bildfolgen gezielt zu trennen oder zusammenzuhalten oder, ob sie andere, nicht grammatikbasierte Gründe haben. Die Grundidee dabei basiert auf einer Messung der Korrelation zwischen den Positionen der Szenengrenzen und denen der graduellen Übergänge. Es wird entschieden, dass die Übergänge im Sinne einer Filmgrammatik eingesetzt werden, wenn entweder eine positive Korrelation (beispielsweise zumindest teilweise Abhängigkeit der Szenengrenzen von graduellen Übergängen) oder eine Folge von graduellen Übergängen im Video gefunden wird. In diesen Fällen besteht ein Zusammenhang zwischen der Filmgrammatik und den Übergängen und das Video kann mithilfe des Verfahrens nach der Erfindung optimal in Szenen segmentiert werden. Ist dies nicht der Fall, kann zumindest die zweite Maßnahme nach der Erfindung nicht angewendet werden. Eine Ähnlichkeitsanalyse gemäß der ersten Maßnahme nach der Erfindung erbringt auch in Videos, bei denen Übergänge nicht mit einem Bezug auf die Filmgrammatik eingesetzt werden, Vorteile, da hier ein Bezug der Übergänge zur Filmgrammatik nicht erforderlich ist.

Nach der Detektion der Bildfolgengrenzen mit einem bekannten Verfahren und der Detektion mit einem mit der ersten erfindungsgemäßen Maßnahme verbesserten Szenenerkennungsverfahren ist die Korrelation zwischen den detektierten Bildfolge- und Szenengrenzen zu messen. Dazu werden die Positionen der Szenengrenzen und die graduellen Übergänge zwischen den Bildfolgen, FADE, DISSOLVE, WIPE, analysiert. Sie sind positiv korreliert, wenn die Wahrscheinlichkeit, dass eine Szenengrenze übereinstimmt mit einem gegebenen graduellen Übergang (engl. gradual), größer ist als die Wahrscheinlichkeit, dass die Szenengrenze mit einem beliebigen Übergang übereinstimmt. Es gilt:

$$P(scb \mid gradual) > P(scb) \tag{20}$$

P(scb | gradual) bezeichnet hier die bedingte Wahrscheinlichkeit, dass ein Übergang eine Szenengrenze ist, wenn bekannt ist, dass dieser Übergang ein gradueller Übergang ist. Dies wird auch manchmal als Wahrscheinlichkeit bezeichnet, dass eine Szenengrenze übereinstimmt mit einem gegebenen graduellen Übergang.

Eine negative Korrelation bzw. Unabhängigkeit der Szenengrenzen von den graduellen Übergängen liegt vor, wenn P(scb | gradual) kleiner oder gleich P(scb) ist. Unter Nutzung einfacher Algebra und der Regeln nach Bayes kann die Gleichung (20) umgeformt werden zu:

$$P(scb \mid gradual) * P(gradual) > P(scb) * P(gradual) \qquad (21)$$

$$P(gradual \mid scb) * P(scb) > P(scb) * P(gradual) \qquad (22)$$

$$P(gradual \mid scb) > P(gradual) \qquad (23)$$

Sowohl Gleichung (20) als auch Gleichung (23), die besagt, dass ebenfalls eine positive Korrelation zwischen den detektierten Bildfolge- und Szenengrenzen vorliegt, wenn die Wahrscheinlichkeit, dass ein gradueller Übergang übereinstimmt mit einer gegebenen Szenengrenze, größer ist als die Wahrscheinlichkeit, dass überhaupt ein gradueller Übergang vorliegt, kann rechnerisch bestimmt werden, sodass die oben genannte Entscheidung getroffen werden kann. Wenn eine positive Korrelation festgestellt wurde, werden die Szenengrenzen erneut detektiert, nunmehr mit einem Bezug zwischen Übergängen und Filmgrammatik.

Ebenfalls werden die Szenengrenzen erneut detektiert, wenn mehr als m graduelle Übergänge in einer Szene mit n Übergängen gefunden werden (im Testset gilt m=5, n=10). Auch in diesem Falle kann davon ausgegangen werden, dass die Übergänge gemäß der Filmgrammatik eingesetzt werden. Bei einem erneuten Durchlauf der Szenendetektion wird dann entsprechend ein neuer Satz von Szenengrenzen detektiert. Dabei können jedoch die meisten Ergebnisse aus dem ersten Durchgang genutzt werden, um den Rechenaufwand zu minimieren. Die Ergebnisse aus dem zweiten Durchgang werden dann dem Verfahren nach der Erfindung unterzogen. Ist kein zweiter Durchlauf erforderlich, werden direkt die Ergebnisse aus dem ersten Durchlauf weiterverarbeitet.

## TESTERGEBNISSE

An einem vorgegebenen Testset wurden mit einem entsprechenden Verfahren die Übergänge zwischen den Bildfolgen automatisch ermittelt. Die Maßnahmen zur Verbesserung von Szenenerkennungsverfahren nach der Erfindung wurden an zwei Versionen des Testsets evaluiert. Bei der ersten Version wurden nach der automatischen Erkennung der Bildfolgengrenzen, alle falsch erkannten Grenzen und Übergänge manuell korrigiert. Bei der zweiten Version erfolgte keine manuelle Korrektur. Dies dient der Beurteilung, in wie weit sich Fehler bei der Erkennung der Bildfolgengrenzen und -übergänge auf die Resultate bei der Szenenerkennung auswirken.

Als Bewertungsmaß für die Qualität der gefundenen Szenengrenzen werden die Parameter Recall re (Wiederfindung) und Genauigkeit pr (Präzision) definiert:

$$re = \frac{c}{c + m} \qquad \text{und} \qquad pr = \frac{c}{c + fp} \qquad (20).$$

mit

c   = korrekt detektierte, erforderliche Szenengrenzen
co  = korrekt detektierte, optionale Szenengrenzen
m   = falsch detektierte Szenengrenzen
fp  = nicht detektierte Szenengrenzen

Es ergaben sich die Ergebnisse gemäß **TABELLE 5** bei einer Testset-Version mit manuell korrigierten Bildfolgengrenzen und -übergängen und gemäß **TABELLE 6** bei unkorrigierter automatisierter Auffindung der Bildfolgengrenzen und -übergänge. Drei Algorithmen wurden getestet:

- Basic: Basis-Algorithmus für eigenschaftsbasierte Ähnlichkeitsanalyse (time-adaptive-grouping) mit einer Vorgabe der beiden repräsentativen Videobilder aus einer Bildfolge mit einer Entfernung von 5 Bildern von der Bildfolgengrenze,
- M1 : Anwendung des Basis-Algorithmus mit einer konkreten Wahl von Videobildern außerhalb von Übergängen zwischen den Bildfolgen (erste erfindungsgemäße Maßnahme) und
- M1+2: Anwendung des Basis-Algorithmus mit einer konkreten Wahl von repräsentativen Videobildern außerhalb von Übergängen zwischen den Bildfolgen und zusätzliche Berücksichtung der separierenden und verbindenden Wirkung von Übergängen unterschiedlicher Typen (erste und zweite erfindungsgemäße Maßnahme).

**TABELLE 5**

|       | re    | pr    | c   | co | m  | fp |
|-------|-------|-------|-----|----|----|----|
| Basic | 65.9% | 71.1% | 135 | 41 | 70 | 55 |
| M1    | 72.2% | 71.8% | 148 | 39 | 57 | 58 |
| M1+2  | 78.5% | 82.1% | 161 | 35 | 44 | 35 |

**TABELLE 6**

|       | re    | pr    | c   | co | m  | fp |
|-------|-------|-------|-----|----|----|----|
| Basic | 63.4% | 67.7% | 130 | 40 | 75 | 62 |
| M1    | 71.2% | 71.6% | 146 | 39 | 59 | 58 |
| M1+2  | 75.6% | 77.5% | 155 | 30 | 50 | 45 |

Zu erkennen ist, dass die bei der Erfindung formulierten Maßnahmen die Anzahl der fälschlicherweise und nicht detektierten Szenengrenzen deutlich reduzieren. Wiederfindung und Präzision sind entsprechend angestiegen.

Obige Ausführungsbeispiele ermöglichen ein automatisiertes Verfahren zur zeitlichen Segmentierung eines Videos in Szenen mit einer Zusammenfassung von Bildfolgen durch eine Erkennung von Bildfolgengrenzen als Szenengrenzen, wobei an den Bildfolgengrenzen verschiedene Typen von Übergängen auftreten und die Bildfolgengrenzen und Übergänge nach Lage, Typ und Länge bekannt sind, und zwar mit einer Feststellung der Ähnlichkeit zwischen jeweils zwei Bildfolgen durch Auswahl und Vergleich von jeweils repräsentativen Bildern aus jeder Bildfolge, die zeitlich soweit wie möglich auseinander aber außerhalb von Übergängen liegen, und/oder einer filmgrammatik- und wahrscheinlichkeitsbasierten Berücksichtigung verschiedener Typen von Übergängen zwischen Bildfolgen bezüglich deren separierender und/oder verbindender Wirkung auf die die Übergänge umgebenden Bildfolgen und entsprechend gewichteter Einbeziehung der Wirkungen der unterschiedlichen Typen von Übergängen in die Zusammenfassung von Bildfolgen zu Szenen.

Dabei kann eine Auswahl von repräsentativen Videobildern, die zusätzlich noch zumindest eine Anzahl von x Videobildern vor oder hinter der jeweiligen Bildfolgengrenze liegen, vorgesehen sein.

Die Feststellung der separierenden oder verbindenden Wirkung für jeden Übergang k zwischen Bildfolgen kann durch Ermittlung einer Gesamtanziehung $stta_t(k)$ stattfinden, die sich aus einer separierenden Anziehung $stta_{t,sep}(k)$ und einer verbindenden Anziehung $stta_{t,merge}(k)$ zusammensetzt, und zwar gemäß $stta_t(k) = stta_{t,sep}(k) + stta_{t,merge}(k)$, wobei $stta_t(k)$ zur Kohärenz $coh(k)$ bei einer kohärenzbasierten Szenensegmentierung oder Ähnlichkeit $sim(i,j)$ bei einer ähnlichkeitsbasierten Szenensegmentierung zwischen zwei Bildfolgen i,j addiert wird, wobei die Gesamtanziehung $stta_t(k)$ für eine separierende Wirkung des Übergangs k niedrig und für eine verbindende Wirkung hoch ist. Hierbei kann eine durch Wichtungsfaktoren $\alpha, \beta$ gewichtete Addition der Gesamtanziehung $stta_t(k)$ zu den entsprechenden Werten bei kohärenzbasierter Szenensegmentierung gemäß $coh_{mod}(k) = \alpha\, coh(k) + \beta\, stta_t(k)$ bzw. - bei ähnlichkeitsbasierter Szenensegmentierung- gemäß $$sim_{mod}(i,j) = \alpha\, sim(i,j) + \beta\, stta_s(i,j) \text{ mit } stta_s(i,j) = \min_{k=i}^{j-1} stta_t(k)$$

verwendet werden. Für die Wichtungsfaktoren kann $\alpha,\beta = 0,5$ gelten.

Eine Bestimmung der separierenden Anziehung $stta_{t,sep}(k)$ kann insbedonere durch Anziehungswerte *attr* in Abhängigkeit vom Typ des Übergangs durchgeführt werden, mit $stta_{t,sep}(k) = attr_{CUT}$, wenn der Übergang k vom Typ CUT ist, $stta_{t,sep}(k) = attr_{FADE}$, wenn der Übergang k vom Typ FADE ist, $stta_{t,sep}(k) = attr_{DIS}$, wenn der Übergang k vom Typ DISSOLVE ist, $stta_{t,sep}(k) = attr_{WIPE}$, wenn der Übergang k vom Typ WIPE ist, und $stta_{t,sep}(k) = attr_{SUBSHOT}$, wenn der Übergang k ein Übergang zwischen zwei untergeordneten Bildfolgen der gleichen übergeordneten Bildfolge ist, wobei ein CUT ein abrupter und ein FADE, DISSOLVE oder WIPE ein gradueller Übergang ist. Dabei kann eine Ermittlung der Anziehungswerte attr auf der Basis von statistischen Auswertungen an Videos unterschiedlichen Typs bezüglich der Übereinstimmung von Szenengrenzen und Bildfolgengrenzen in Abhängigkeit von den auftretenden Übergängen vorgenommen werden, und zwar beispielsweise durch eine Ermittlung der Anziehungswerte *attr* in Form von Quotienten der Wahrscheinlichkeit P, dass eine Szenengrenze scb auf einem Übergang Typ CUT liegt zu den Wahrscheinlichkeit, dass eine Szenengrenze scb auf einem anderen Übergang eines bestimmten Typs liegt, mit $attr_{CUT} = (P(scb/CUT)/P(scb/CUT)$, $attr_{FADE} = (P(scb/CUT)/P(scb/FADE)$, $attr_{DIS} = (P(scb/CUT)/P(scb/DISSOLVE)$, $attr_{WIPE} = (P(scb/CUT)/P(scb/WIPE)$, $attr_{SUBSHOT} = (P(scb/CUT)/P(scb/CUT) = attr_{CUT}$. Hierbei kann a$ttr_{CUT} = 1,0$; $attr_{FADE} = 0,047$; $attr_{DIS} = 0,120$ und $attr_{WIPE} = 0,080$ gewählt werden.

Eine Bestimmung der verbindenden Anziehung $stta_{t,merge}(k)$ kann gemäß

$$stta_{t,merge}(k) = \sum_{i=1}^{r} f \frac{r+1-i}{r}(2 - stta_{t,sep}(k-i) - stta_{t,sep}(k+1))$$ stattfinden, mit f = Vergleichsfaktor verbindender zu separierender Wirkung, r = Reichweite der verbindenden Wirkung in der Bildfolge, wobei die verbindende Wirkung vom verbindenden Übergang weg linear abnimmt. Hierbei kann f = 0,2 und r = 10 oder f = 0,5 und r = 4 gelten.

Eine Überprüfung der Inhaltsbezogenheit der Übergänge zwischen den Bildfolgen durch Test kann, ob eine positive Korrelation zwischen graduellen Übergängen und Szenengrenzen und/oder eine Folge von graduellen Übergängen zwischen Bildfolgen vorliegt, vorgesehen sein, und zwar beispielsweise mit Vorliegen einer positiven Korrelation, wenn die Wahrscheinlichkeit, dass eine Szenengrenze übereinstimmt mit einem gegebenen graduellen Übergang, größer ist als die Wahrscheinlichkeit, dass die Szenengrenze mit einem beliebigen Übergang übereinstimmt, oder wenn die Wahrscheinlichkeit, dass ein gradueller Übergang übereinstimmt mit einer gegebenen Szenengrenze, größer ist als die Wahrscheinlichkeit, dass ein gradueller Übergang vorliegt.

Die Bildfolgen können in Form von Shots oder Subshots ausgebildet sein, wobei Subshots Unterbildfolgen von Shots sind.

## BEZUGSZEICHENLISTE

| | |
|---|---|
| $\alpha$, $\beta$ | Wichtungsfaktor |
| attr | Anziehungswert |
| coh | Kohärenzwert |
| CUT | Übergang, abrupter Schnitt |
| DIS | Übergang, Überblendung ganzes Bild |
| f | Vergleichsfaktor verbindende zu separierende Wirkung |
| FADE | Übergang Ein-/Ausblendung von/nach schwarz |
| i,j | Bildfolge |
| k | Bildfolge bzw. Übergang |
| min | Minimum |
| mod | modifizierte Werte |
| P(scb) | Wahrscheinlichkeit einer Szenengrenze allgemein |
| P(scb \| sttype) | Wahrscheinlichkeit einer Szenengrenze an einem Übergang bestimmten Typs |
| r | Reichweite verbindende Wirkung von Übergängen |
| scb | Szenengrenze |
| shot A, B, C... | Bildfolge mit Bildinhalt A, B, C.... |
| sim | Ähnlichkeitswert |
| $stta_t(k)$ | Anziehung Übergang k mit Berücksichtigung der separierenden und verbindenden Wirkung |
| $stta_{t,merge}(k)$ Anziehung | Übergang k mit Berücksichtigung der verbindenden Wirkung |
| $stta_{t,sep}(k)$ | Anziehung Übergang k mit Berücksichtigung der separierenden Wirkung |
| $stta_s(i,j)$ | Anziehung zwischen Bildfolgen i und j mit Berücksichtigung der separierenden und verbindenden Wirkung |

| stta$_{s,merge}$(i,j) | Anziehung zwischen Bildfolgen i und j mit Berücksichtigung der verbindenden Wirkung |
| stta$_{s,sep}$(i,j) | Anziehung zwischen Bildfolgen i und j mit Berücksichtigung der separierenden Wirkung |
| th | Schwellwert |
| WIPE | Übergang, Überblendung Teilbild |

**Patentansprüche**

1. Verfahren zur zeitlichen Segmentierung eines Videos in Szenen mit einer Zusammenfassung von Bildfolgen durch eine Erkennung von Bildfolgengrenzen als Szenengrenzen, wobei an den Bildfolgengrenzen verschiedene Typen von Übergängen auftreten und die Bildfolgengrenzen und Übergänge nach Lage und Typ bekannt sind, mit einer filmgrammatik- und wahrscheinlichkeitsbasierten Berücksichtigung der verschiedenen Typen von Übergängen zwischen Bildfolgen bezüglich deren separierender und verbindender Wirkung auf die die Übergänge umgebenden Bildfolgen und entsprechend gewichteter Einbeziehung der Wirkungen der unterschiedlichen Typen von Übergängen in die Zusammenfassung von Bildfolgen zu Szenen, wobei die filmgrammatik- und wahrscheinlichkeitsbasierte Berücksichtigung der verschiedenen Typen von Übergängen folgende Schritte aufweist:
   Modifizieren entweder einer Kohärenzfunktion coh(k), die eine Kohärenz von Bildfolgen vor dem Übergang k mit Bildfolgen hinter dem Übergang k repräsentiert und mit minimalen Kohärenzwerten Szenengrenzen anzeigt, oder einer Ähnlichkeitsfunktion sim(i,j), die eine Ähnlichkeit zwischen zwei Bildfolgen i und j repräsentiert, wobei eine große Ähnlichkeit in Relation zu einem vorgegebenen Schwellwert impliziert, dass die Bildfolgen i und j einer gemeinsamen Szene angehören, durch Zuordnen, eines Anziehungswertes zu jedem Übergang k in Abhängigkeit von dem Typ des jeweiligen Übergangs, um eine Funktion stta$_t$(k) zu erhalten und Durchführen einer Addition von

   stta$_t$(k) zu coh(k) bzw. von $stta_s(i,j) = \min_{k=i}^{j-1} stta_t(k)$ zu sim(i,j), wobei sich stta$_t$(k) aus einer separierenden Anziehung stta$_{t,sep}$(k) und einer verbindenden Anziehung stta$_{t,merge}$(k) gemäß stta$_t$(k)= stta$_{t,sep}$(k) + stta$_{t,merge}$(k) zusammensetzt, stta$_t$(k) für eine separierende Wirkung des Übergangs k niedrig und für eine verbindende Wirkung hoch ist, die separierende Anziehung stta$_{t,sep}$(k) für graduelle Übergänge kleiner als für abrupte Übergänge ist und stta$_{t,merge}$(k) so aus stta$_{t,sep}$(k) berechnet wird dass ein gradueller Übergang k den Kohärenzwert coh(k) für den Übergang k erniedrigt und die Kohärenzwerte in der zeitlichen Nachbarschaft des Übergangs erhöht, bzw. der Ähnlichkeitswert sim(i, j) zwischen Bildfolgen i,j auf verschiedenen Seiten des graduellen Übergangs durch stta$_{t,merge}$ (k) erniedrigt wird, während derselbe zwischen Bildfolgen i,j auf derselben Seite des graduellen Übergangs k erhöht wird; und
   Durchführen einer Szenensegmentierung auf Basis der modifizierten Kohärenzfunktion bzw. der modifizierten Ähnlichkeitsfunktion.

2. Verfahren nach Anspruch 1, wobei das Modifizieren derart durchgeführt wird, dass

$$stta_{t,merge}(k) = \sum_{i=1}^{r} f \frac{r+1-i}{r} (2 - stta_{t,sep}(k-i) - stta_{t,sep}(k+1)),$$

wobei eine Anzahl von Übergängen angibt und f einen Vergleichsfaktor darstellt.

3. Verfahren nach Anspruch 1,wobei wobei das Modifizieren unter Durchführung einer durch Wichtungsfaktoren α,β gewichteten Addition der Gesamtanziehung stta$_t$(k) zu den entsprechenden Werten bei kohärenzbasierter Szenensegmentierung:

$$coh_{mod}(k) = \alpha\, coh(k) + \beta\, stta_t(k)$$

oder
ähnlichkeitsbasierter Szenensegmentierung:

$$sim_{mod}(i, j) = \alpha\, sim(i, j) + \beta\, stta_s(i, j)$$

mit

$$stta_s(i, j) = \min_{k=i}^{j-1} stta_t(k)$$

durch geführt wird, wobei $\alpha$ und $\beta$ vorbestimmte Wichtungsfaktoren sind.

4. Verfahren zur zeitlichen Segmentierung eines Videos in Szenen, wobei das Verfahren folgende Schritte aufweist:

zeitliche Segmentierung des Videos in Szenen mit einer Zusammenfassung von Bildfolgen durch eine Erkennung von Bildfolgengrenzen als Szenengrenzen, wobei an den Bildfolgengrenzen verschiedene Typen von Übergängen auftreten und die Bildfolgengrenzen und Übergänge nach Lage und Länge bekannt sind, mit einer Feststellung der Ähnlichkeit zwischen jeweils zwei Bildfolgen durch Auswahl und Vergleich von zumindest einem repräsentativen Bild pro Bildfolge der jeweils zwei Bildfolgen, das außerhalb der Übergänge liegt; und

Bestimmen, ob eine positive Korrelation zwischen Positionen der als Szenengrenzen erkannten Bildfolgengrenzen und Bildfolgengrenzen eines graduellen Übergangstyps besteht, durch Überprüfung, ob die Wahrscheinlichkeit, dass eine Szenengrenze übereinstimmt mit einem gegebenen graduellen Übergang, größer ist als die Wahrscheinlichkeit, dass eine Szenengrenze mit einem beliebigen Übergang übereinstimmt, oder wenn die Wahrscheinlichkeit, dass ein gradueller Übergang übereinstimmt mit einer gegebenen Szenengrenze, größer ist als die Wahrscheinlichkeit, dass ein gradueller Übergang vorliegt,

wobei in dem Fall einer positiven Korrelation, eine erneute zeitliche Segmentierung des Videos in Szenen mit einer Zusammenfassung von Bildfolgen durch die Erkennung von Bildfolgengrenzen als Szenengrenzen, mit der filmgrammatik- und wahrscheinlichkeitsbasierten Berücksichtigung der verschiedenen Typen von Übergängen zwischen Bildfolgen bezüglich deren separierender und/oder verbindender Wirkung auf die die Übergänge umgebenden Bildfolgen und entsprechend gewichteter Einbeziehung der Wirkungen der unterschiedlichen Typen von Übergängen in die Zusammenfassung von Bildfolgen zu Szenen gemäß einem der Ansprüche 1 bis 3 stattfindet.

5. Verfahren nach Anspruch 4, wobei das Verfahren vor der filmgrammatik- und wahrscheinlichkeitsbasierten Berücksichtigung folgenden Schritt aufweist:

Bestimmen, ob eine Folge von Übergängen eines graduellen Typs in dem Video vorliegt;

wobei in dem Fall des Vorliegens einer Folge von Übergängen des graduellen Typs eine erneute zeitliche Segmentierung des Videos in Szenen mit einer Zusammenfassung von Bildfolgen durch die Erkennung von Bildfolgengrenzen als Szenengrenzen, mit der filmgrammatik- und wahrscheinlichkeitsbasierten Berücksichtigung der verschiedenen Typen von Übergängen zwischen Bildfolgen bezüglich deren separierender und/oder verbindender Wirkung auf die die Übergänge umgebenden Bildfolgen und entsprechend gewichteter Einbeziehung der Wirkungen der unterschiedlichen Typen von Übergängen in die Zusammenfassung von Bildfolgen zu Szenen stattfindet.

6. Verfahren nach Anspruch 4 oder 5, bei dem bei der Auswahl und dem Vergleich pro Bildfolge mehrere repräsentative Bilder so ausgewählt werden, dass dieselben außerhalb der Übergänge liegen und die ausgewählten Bilder jeder der jeweils zwei Bildfolgen so weit wie möglich auseinander liegen.

7. Verfahren nach einem der Ansprüche 4 bis 6, bei dem bei der Auswahl und dem Vergleich zwei repräsentative Bilder pro Bildfolge der jeweils zwei Bildfolgen so ausgewählt werden, dass dieselben direkt vor bzw. hinter einem jeweiligen der Übergänge liegen.

8. Verfahren nach einem der Ansprüche 4 bis 7, bei dem bei der Auswahl und dem Vergleich X repräsentative Bilder $kf_{Bx}$ aus einer ersten Bildfolge der jeweils zwei Bildfolgen und Y repräsentative Bilder $kf_{By}$ aus einer zweiten Bildfolge der jeweils zwei Bildfolgen ausgewählt und verglichen werden, und bei dem die Feststellung der Ähnlichkeit durch eine maximale Ähnlichkeit zwischen einem beliebigen Paar aus einem der repräsentativen Bilder $kf_{Bx}$ und einem der repräsentativen Bilder $kf_{By}$ bestimmt wird.

**Claims**

1. Method for time segmenting of a video into scenes with a grouping of image sequences by means of a recognition of image sequence boundaries as scene boundaries, wherein different types of transitions occur at the image sequence boundaries and wherein the image sequence boundaries and transitions being known according to their locations and types, with film grammar and probability based allowance for the various types of transitions between image sequences with regard to their separating and connecting effects on the image sequences surrounding the transitions, and with incorporation of the effects of the various types of transitions into the grouping of image sequences to form scenes, said film grammar and probability based allowance for the various types of transitions comprising the following steps:

   modifying either a coherence function coh(k) representing a coherence of image sequences prior to the transition k with image sequences after the transition k and indicates scene boundaries by means of minimum coherence values, or modifying a similarity function sim(i,j) representing a similarity between two image sequences i and j, a high level of similarity in relation to a predefined threshold value implying that the image sequences i and j belong to a shared scene, by associating, with each transition k, an attraction value in dependence on the type of the respective transition so as to obtain a function $stta_t(k)$, and performing an addition of $stta_t(k)$ to coh(k) or

   of $stta_s(i,j) = \min_{k=i}^{j-1} stta_t(k)$ to sim(i,j), $stta_t(k)$ being composed of a separating attraction $stta_{t,sep}(k)$ and a connecting attraction $stta_{t,merge}(k)$ in accordance with $stta_t(k) = stta_{t,sep}(k) + stta_{t,merge}(k)$, $stta_t(k)$ being low for a separating effect of the transition k and being high for a connecting effect, the separating attraction $stta_{t,sep}(k)$ being smaller for gradual transitions than for abrupt transitions, and $stta_{t,merge}(k)$ being calculated from $stta_{t,sep}(k)$ such that a gradual transition k reduces the coherence value coh(k) for the transition k and increases the coherence values in the temporal neighborhood of the transition, or that the similarity value sim(i,j) between image sequences i,j being reduced on various sides of the gradual transition by $stta_{t,merge}(k)$, whereas same between bit sequences i,j is increased on the same side of the gradual transition k; and
   performing a scene segmentation on the basis of the modified coherence function or the modified similarity function.

2. Method as claimed in claim 1, wherein said modification is performed such that

$$stta_{t,merge}(k) = \sum_{i=1}^{r} f\frac{r+1-i}{r}(2 - stta_{t,sep}(k-i) - stta_{t,sep}(k+1)),$$

   wherein r indicates a number of transitions, and f represents a comparative factor.

3. Method as claimed in claim 1, wherein said modification is performed while performing an addition, weighted by weighting factors α,β, of the overall attraction $stta_t(k)$ to the corresponding values with
   coherence-based scene segmentation:

$$coh_{mod}(k) = \alpha\, coh(k) + \beta\, stta_t(k)$$

   or
   similarity-based scene segmentation:

$$sim_{mod}(i,j) = \alpha\, sim(i,j) + \beta\, stta_s(i,j)$$

   with

$$stta_s(i, j) = \min_{k=i}^{j-1} stta_t(k),$$

wherein $\alpha$ and $\beta$ are predetermined weighting factors.

4. Method for time segmenting of a video into scenes, the method comprising the following steps:

time segmenting of a video into scenes with a grouping of image sequences by means of a recognition of image sequence boundaries as scene boundaries, wherein different types of transitions occur at the image sequence boundaries and wherein the image sequence boundaries and transitions being known according to their locations and types while establishing the similarity between two image sequences, respectively, by selecting and comparing at least one representative image per image sequence of the respectively two image sequences that is located outside the transitions; and

determining whether there is a positive correlation between positions of the bit-sequence boundaries that have been recognized as scene boundaries and image sequence boundaries of a gradual transition type by verifying whether the probability that a scene boundary matches a given gradual transition is higher than the probability that a scene boundary marches any transition, or when the probability that a gradual transition matches a given scene boundary is higher than the probability that there is a gradual transition,

wherein in the event of a positive correlation, repeated time segmenting of a video into scenes with a grouping of image sequences by means of the recognition of image sequence boundaries as scene boundaries, with film grammar and probability based allowance for the various types of transitions between image sequences with regard to their separating and/or connecting effects on the image sequences surrounding the transitions, and with incorporation of the effects of the various types of transitions into the grouping of image sequences to form scenes, in accordance with any of claims 1 to 3 takes place.

5. Method as claimed in claim 4, wherein the method comprises the following step prior to the film-grammar- and probability-based consideration:

determining whether a sequence of gradual-type transitions exists within the video;

wherein in the event of the existence of a sequence of gradual-type transitions, repeated time segmenting of a video into scenes with a grouping of image sequences by means of the recognition of image sequence boundaries as scene boundaries, with film grammar and probability based allowance for the various types of transitions between image sequences with regard to their separating and/or connecting effects on the image sequences surrounding the transitions, and with incorporation of the effects of the various types of transitions into the grouping of image sequences to form scenes takes place.

6. Method as claimed in claim 4 or 5, wherein the selection and the comparison consist in selecting, per image sequence, several representative images in such a manner that same are located outside the transitions and such that the selected images of each of the respectively two image sequences are as far apart from each other as possible.

7. Method as claimed in any of claims 4 to 6, wherein the selection and the comparison consist in selecting two representative images per image sequence of the respectively two image sequences in such a manner that they are located directly prior to and/or after a respective one of the transitions.

8. Method as claimed in any of claims 4 to 7, wherein the selection and the comparison consist in selecting and comparing X representative images $kf_{Bx}$ from a first image sequence of the respectively two image sequences and Y representative images $kf_{By}$ from a second image sequence of the respectively two image sequences, and wherein establishing the similarity is determined by a maximum similarity between any pair consisting of one of the representative images $kf_{Bx}$ and one of the representative images $kf_{By}$.

**Revendications**

1. Procédé de segmentation temporelle d'une vidéo en scènes avec un regroupement de séquences d'images par une identification de limites de séquence d'images comme limites de scène, aux limites de séquence d'images se présentant différents types de transitions et les limites de séquence d'images et transitions étant connues selon la position et le type, avec prise en compte sur base de grammaire de film et de probabilité des différents types de transitions entre les séquences d'images en ce qui concerne leur effet de séparation et de liaison sur les séquences d'images entourant les transitions et avec incorporation pondérée en conséquence des effets des différents types de transitions dans le regroupement de séquences d'images pour former des scènes, la prise en compte sur base de grammaire de film et de probabilité des différents types de transitions présentant les étapes suivantes consistant à:

modifier soit une fonction de cohérence coh(k) qui représente une cohérence de séquences d'images avant la transition k avec des séquences d'images après la transition k et indique par des valeurs de cohérence minimales les limites de scène, soit une fonction de similitude sim(i,j) qui représente une similitude entre deux séquences d'images i et j, une grande similitude en rapport avec une valeur de seuil prédéterminée impliquant que les séquences d'images i et j appartiennent à une scène commune, en associant à chaque transition k une valeur d'attraction en fonction du type de la transition respective, pour obtenir une fonction $stta_t(k)$ et en réalisant une

addition de $stta_t(k)$ avec coh(k) ou de $\quad stta_s\left(i,j\right) = \min_{k=i}^{j-1} stta_t\left(k\right) \quad$ avec sim(i,j), $stta_t(k)$ se

composant d'une attraction de séparation $stta_{t,sep}(k)$ et d'une attraction de liaison $stta_{t,merge}(k)$ selon $stta_t(k) = stta_{t,sep}(k) + stta_{t,merge}(k)$, $stta_t(k)$ étant basse pour un effet de séparation de la transition k et haute pour un effet de liaison, l'attraction de séparation $stta_{t,sep}(k)$ étant, pour les transitions graduelles, plus petite que pour les transitions abruptes et $stta_{t,merge}(k)$ étant calculée à partir de $stta_{t,sep}(k)$ de sorte qu'une transition graduelle k diminue la valeur de cohérence coh(k) pour la transition k et augmente les valeurs de cohérence à proximité temporelle de la transition, ou que la valeur de similitude sim(i,j) entre séquences d'images i,j de différents côtés de la transition graduelle soit diminuée par $stta_{t,mer9e}(k)$, tandis que celle entre séquences d'images i,j du méme côté de la transition graduelle k est augmentée; et

réaliser une segmentation de scène sur base de la fonction de cohérence modifiée ou de la fonction de similitude modifiée.

2. Procédé selon la revendication 1, dans lequel la modification est réalisée de sorte que

$$ stta_{t,merge}\left(k\right) = \sum_{i=1}^{r} f\,\frac{r+1-i}{r}\left(2 - stta_{t,sep}\left(k-i\right) - stta_{t,sep}\left(k+1\right)\right), $$

r indiquant un nombre de transitions et f un facteur de comparaison.

3. Procédé selon la revendication 1, dans lequel la modification est réalisée en réalisant une addition pondérée par les facteurs de pondération α, β de l'attraction d'ensemble $stta_t(k)$ avec les valeurs correspondantes à une segmentation de scène sur base de cohérence:

$$ coh_{mod}(k) = a\ coh(k) + \beta\ stta_t(k) $$

ou
segmentation de scène sur base de similitude:

$$ sim_{mod}(i,j) = a\ sim(i,j) + \beta\ stta_s(i,j) $$

avec

$$stta_s(i, j) = \min_{k=i}^{j-1} stta_t(k),$$

$\alpha$ et $\beta$ étant des facteurs de pondération prédéterminés.

4. Procédé de segmentation temporelle d'une vidéo en scènes, le procédé présentant les étapes suivantes consistant à:

segmenter dans le temps la vidéo en scènes avec un regroupement de séquences d'images par une identification de limites de séquence d'images comme limites de scène, aux limites de séquence d'images se présentant différents types de transitions et les limites de séquence d'images et transitions étant connues selon la position et le type, avec constatation de la similitude entre chaque fois deux séquences d'images par sélection et comparaison d'au moins une image représentative par séquence d'images des deux séquences d'images respectives qui se situe en-dehors des transitions; et
déterminer s'il existe une corrélation positive entre les positions des limites de séquence d'images identifiées comme limites de scène et les limites de séquence d'images d'un type de transition graduelle, en vérifiant si la probabilité qu'une limite de scène coïncide avec une transition graduelle donnée est supérieure à la probabilité qu'une limite de scène coïncide avec une transition quelconque, ou si la probabilité qu'une transition graduelle coïncide avec une limite de scène donnée est supérieure à la probabilité qu'une transition graduelle soit présente, en cas de corrélation positive ayant lieu une nouvelle segmentation temporelle de la vidéo en scènes avec un regroupement de séquences d'images par identification de limites de séquence d'images comme limites de scène, avec prise en compte sur base de grammaire de film et de probabilité des différents types de transitions entre les séquences d'images en ce qui concerne leur effet de séparation et/ou de liaison sur les séquences d'images entourant les transitions et avec incorporation pondérée en conséquence des effets des différents types de transitions dans le regroupement de séquences d'images pour former des scènes selon l'une des revendications 1 à 3.

5. Procédé selon la revendication 4, le procédé présentant avant la prise en compte sur base de grammaire de film et de probabilité l'étape suivante consistant à:

déterminer si une séquence de transitions d'un type graduel est présente dans la vidéo;
en cas de présence d'une séquence de transitions du type graduel ayant lieu une nouvelle segmentation temporelle de la vidéo en scènes avec un regroupement de séquences d'images par l'identification de limites de séquence d'images comme limites de scène, avec prise en compte sur base de grammaire de film et de probabilité des différents types de transitions entre les séquences d'images en ce qui concerne leur effet de séparation et/ou de liaison sur les séquences d'images entourant les transitions et avec incorporation pondérée en conséquence des effets des différents types de transitions dans le regroupement de séquences d'images pour former des scènes.

6. Procédé selon la revendication 4 ou 5, dans lequel lors de la sélection et de la comparaison sont sélectionnées, par séquence d'images, plusieurs images représentatives de sorte que celles-ci se situent en-dehors des transitions et que les images sélectionnées de chacune des deux séquences d'images respectives se trouvent aussi éloignées que possible l'une de l'autre.

7. Procédé selon l'une des revendications 4 à 6, dans lequel lors de la sélection et de la comparaison sont sélectionnées, par séquence d'images, deux images représentatives de sorte que celles-ci se situent directement avant ou après l'une respective des transitions.

8. Procédé selon l'une des revendications 4 à 7, dans lequel lors de la sélection et de la comparaison sont sélectionnées et comparées X images représentatives $kf_{Bx}$ d'une première séquence d'images des chaque fois deux séquences d'images et Y images représentatives $kf_{By}$ d'une deuxième séquence d'images des chaque fois deux séquences d'images, et dans lequel la constatation de la similitude est déterminée par une similitude maximale entre une paire quelconque composée d'une des images représentatives $kf_{Bx}$ et d'une des images représentatives $kf_{By}$.

hohe Ähnlichkeit

Bildfolge A          Bildfolge B

Bildnummer

Bildfolgengrenze    Anfang und Ende eines
                    graduellen Übergangs

Stand der Technik                        Fig.1A

niedrige Ähnlichkeit

Bildfolge A          Bildfolge B

Bildnummer

Bildfolgengrenze    Anfang und Ende eines
                    graduellen Übergangs

                                         Fig.1B

Fig.2

Szenengrenzen

Kohärenzwert

Stand der Technik

Bilder / Bildfolgen

Fig.3A

Stand der Technik

Szenengrenze

Fig.3B

Szene 1        Szene 2        Szene 3

Gruppe 1        Gruppe 1        Gruppe 1

Gruppe 2        Gruppe 2

Bildfolge...        i  i+1 i+2

Stand der Technik

Fig.3C

$stta_t(k)$

$attr_{CUT}$

$f=d_m/d_s$

$d_m$

$d_s$

$attr_{DIS}$

r          r

...A B A B A C D E  F E F G F G ...  Bildfolge k

DISSOLVE

Szenengrenze

Fig.4

mögliche Szenengrenzen
aufgrund von Bildähnlichkeiten

a)

↓ ↓ ↓

A B A B A C|D E  F E F G F G ...  Bildfolge k

↑
DISSOLVE          tatsächliche
Szenengrenze

## Fig.5A

coh(k)

b)

x x <sup>x</sup> x          x <sup>x</sup> x x x x

————————————————————— th<sub>coh</sub>
x x x

## Fig.5B

stta<sub>t,sep</sub>(k)

c)

x x x x x  x x x x x x — attr<sub>CUT</sub>

x — attr<sub>DIS</sub>

## Fig.5C

coh<sub>modsep</sub>(k)

d)

x x <sup>x</sup> x          x <sup>x</sup> x x x x

————————————————————— th<sub>modsep</sub>
x    x

x

## Fig.5D

stta<sub>t</sub>(k)

e)

x x x <sup>x</sup>  <sup>x</sup> x x x x x x — attr<sub>CUT</sub>

x — attr<sub>DIS</sub>

## Fig.5E

coh<sub>mod</sub>(k)

f)

x x <sup>x</sup> x        <sup>x</sup> x x x x x

x    x
————————————————————— th<sub>cohmod</sub>

x

## Fig.5F

Fig.6A

Fig.6B

Fig.6C

Fig.6D

Fig.6E

Fig.6F

| | |
|---|---|
| Schritt 1 | Bildfolgendetektion mit Detektion der Übergänge |

| | |
|---|---|
| Schritt 2 | Szenenerkennung ohne Beachtung von separierender und verbindender Wirkung gradueller Übergänge |

Positive
Korrelation
zwischen graduellen
Übergängen und Szenengrenzen
oder
Folge von graduellen
Übergängen
?

Nein

Ja

| | |
|---|---|
| Schritt 3 | Szenenerkennung mit Beachtung von separierender und verbindender Wirkung gradueller Übergänge |

## Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 200310123541 A1
- US 200110021276 A1
- EP 1021041 B1
- DE 60119012 T2
- DE 10252731 A1

**In der Beschreibung aufgeführte Nicht-Patentliteratur**

- **C. Petersohn.** Fraunhofer HHI at TRECVID 2004: Shot Boundary Detection System. *TREC Video Retrieval Evaluation Online Proceedings,* 2004
- **C. Petersohn.** Dissolve Shot Boundary Determination. *Proc. IEE European Workshop on the Integration of Knowledge, Semantics and Digital Media Technology,* 2004, 87-94
- **C. Petersohn.** Wipe Shot Boundary Determination. *Proc. IS&T/SPIE Electronic Imaging 2005, Storage and Retrieval Methods and Applications for Multimedia,* 2005, 337-346
- **C. Petersohn.** Sub-Shots - Basic Units of Video. *Proc. IEEE International Conference on Systems, Signals and Image Processing, and EURASIP Conference Focused on Speech and Image Processing, Multimedia Communications and Services,* 27. Juni 2007
- **von Truong, B. T. ; Venkatesh, S. ; Dorai, C.** Film grammar based refinements to extracting scenes in motion pictures. *IEEE International Conference on Multimedia and Expo.,* 2002, vol. 1, 281-284
- **von Lu, X. ; Ma, Y.-F. ; Zhang, H.-J. ; Wu, L.** An integrated correlation measure for semantic video segmentation. *Proc. IEEE International Conference on Multimedia and Expo,* 2002
- Medium knowledge-based macro-segmentation of video into sequences. **von Aigrain, P. ; Joly, P. ; Longueville, V.** Intelligent Multimedia Information Retrieval. AAAI/MIT Press, 1997
- **von Hanjalic, A. ; Lagendijk, R. L. ; Biemond, J.** Automated high-level movie segmentation for advanced video-retrieval systems. *IEEE Trans. on Circuits and Systems for Video Technology,* 1999, vol. 9 (4), 580-588
- **von Rui, Y. ; Huang, T. S. ; Mehrotra, S.** Constructing table-of-content for videos. *Multimedia Syst,* 1999, vol. 7 (5), 359-368
- **von Truong, B. T. ; Venkatesh, S. ; Dorai, C.** Neighborhood coherence and edge based approach for scene extraction in films. *IEEE International Conference on Pattern Recognition,* 2002, vol. 2, 350-353